# EUROPEAN PATENT APPLICATION

(11) **EP 4 701 264 A1**
(43) Date of publication of application: **25.02.2026**
(21) Application number: 23956386.9
(22) Date of filing: 25.10.2023
(51) Int. Cl.: H04W 28/10

(54) **COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: GUO, Yali, Dongguan, Guangdong 523860 (CN); GUO, Boren, Dongguan, Guangdong 523860 (CN)
(74) Representative: RGTH
(86) International application number: PCT/CN2023/126431
(87) International publication number: WO 2025/086134

(57) **Abstract**

The present application relates to a communication method, a device, a computer-readable storage medium, a computer program product and a computer program. The method comprises: on the basis of description information of a first service data flow, a terminal determining that an uplink data packet belongs to the first service data flow, wherein the description information of the first service data flow comprises at least one of the following: an identifier of the first service data flow; and an identifier of a first device; and the terminal transmitting the uplink data packet to a first core network element.

## Description

### TECHNICAL FIELD

This application relates to the communications field, and more specifically, to a communication method, a device, a computer-readable storage medium, a computer program product, and a computer program.

### BACKGROUND

In a conventional technology, a device in a 3GPP (3rd Generation Partnership Project, 3rd generation partnership project) network needs to support configuration of filters of service data flows based on various transmission protocols, and needs to parse and identify data packet headers that use various transmission protocols, thereby performing transmission control on the service data flows. However, with development of applications in various networks such as an internet and an internet of things, some data packets may be transmitted by using a transmission protocol other than transmission protocols supported by a current 3GPP network, or multiple devices may access a network by using a same terminal and transmit data. In these cases, the 3GPP network cannot distinguish between data of different service types and/or data from different devices, resulting in failing to implement precise transmission control or fine-grained transmission control .

### SUMMARY

Embodiments of this application provide a communication method, a device, a computer-readable storage medium, a computer program product, and a computer program.

An embodiment of this application provides a communication method, including:
determining, by a terminal based on description information of a first service data flow, that an uplink data packet belongs to the first service data flow, where the description information of the first service data flow includes at least one of the following: an identifier of the first service data flow or an identity of a first device; and
transmitting, by the terminal, the uplink data packet to a first core network element.

An embodiment of this application provides a communication method, including:
receiving, by a first core network element, a data packet;
determining, by the first core network element based on description information of a first service data flow, that the data packet belongs to the first service data flow, where the description information of the first service data flow includes at least one of the following: an identifier of the first service data flow or an identity of a first device; and
transmitting, by the first core network element, the data packet.

An embodiment of this application provides a communication method, including:
transmitting, by a terminal, an uplink data packet over a first tunnel, where a header of the uplink data packet carries description information of the first tunnel, and the first tunnel is a tunnel between the terminal and a first core network element.

An embodiment of this application provides a communication method, including:
receiving, by a first core network element, an uplink data packet, where a header of the uplink data packet carries description information of a first tunnel, and the first tunnel is a tunnel between a terminal and the first core network element; and
transmitting, by the first core network element, the uplink data packet over a second tunnel, where the header of the uplink data packet carries description information of the second tunnel, and the second tunnel is a tunnel between the first core network element and an application server.

An embodiment of this application provides a communication method, including:
receiving, by a first core network element, a downlink data packet, where a header of the downlink data packet carries description information of a second tunnel, and the second tunnel is a tunnel between the first core network element and an application server; and
transmitting, by the first core network element, the downlink data packet over a first tunnel, where the header of the downlink data packet carries description information of the first tunnel, and the first tunnel is a tunnel between a terminal and the first core network element.

An embodiment of this application provides a terminal, including:
a first processing unit, configured to determine, based on description information of a first service data flow, that an uplink data packet belongs to the first service data flow, where the description information of the first service data flow includes at least one of the following: an identifier of the first service data flow or an identity of a first device; and
a first communications unit, configured to transmit the uplink data packet to a first core network element.

An embodiment of this application provides a first core network element, including:
a second communications unit, configured to: receive a data packet; and transmit the data packet; and
a second processing unit, configured to determine, based on description information of a first service data flow, that the data packet belongs to the first service data flow, where the description information of the first service data flow includes at least one of the following: an identifier of the first service data flow or an identity of a first device.

An embodiment of this application provides a terminal, including:
a first communications unit, configured to transmit an uplink data packet over a first tunnel, where a header of the uplink data packet carries description information of the first tunnel, and the first tunnel is a tunnel between the terminal and a first core network element.

An embodiment of this application provides a first core network element, including:
a second communications unit, configured to: receive an uplink data packet, where a header of the uplink data packet carries description information of a first tunnel, and the first tunnel is a tunnel between a terminal and the first core network element; and transmit the uplink data packet over a second tunnel, where the header of the uplink data packet carries description information of the second tunnel, and the second tunnel is a tunnel between the first core network element and an application server.

An embodiment of this application provides a first core network element, including:
a second communications unit, configured to: receive a downlink data packet, where a header of the downlink data packet carries description information of a second tunnel, and the second tunnel is a tunnel between the first core network element and an application server; and transmit the downlink data packet over a first tunnel, where the header of the downlink data packet carries description information of the first tunnel, and the first tunnel is a tunnel between a terminal and the first core network element.

An embodiment of this application provides a terminal, including a transceiver, a processor, and a memory. The memory is configured to store a computer program, the transceiver is configured to communicate with another device, and the processor is configured to invoke and run the computer program stored in the memory, to cause the terminal to execute the foregoing methods.

An embodiment of this application provides a first core network element, including a transceiver, a processor, and a memory. The memory is configured to store a computer program, the transceiver is configured to communicate with another device, and the processor is configured to invoke and run the computer program stored in the memory, to cause the first core network element to execute the foregoing methods.

An embodiment of this application provides a chip, configured to implement the foregoing methods.

Specifically, the chip includes a processor, configured to invoke a computer program from a memory and run the computer program, to cause a device on which the chip is installed to execute the foregoing methods.

An embodiment of this application provides a computer-readable storage medium, configured to store a computer program. When being run by a device, the computer program causes the device to execute the foregoing methods.

An embodiment of this application provides a computer program product, including computer program instructions, where the computer program instructions cause a computer to execute the foregoing methods.

An embodiment of this application provides a computer program. When being run on a computer, the computer program causes the computer to execute the foregoing methods.

According to the solutions provided in embodiments of this application, at least one of an identifier of a first service data flow or an identity of a first device is added in description information of the first service data flow, so that during transmission of a data packet, the data packet is matched with the description information of the first service data flow, to determine a service data flow to which data belongs. In this way, transmission control on the data packet can be implemented based on the service data flow to which the data packet belongs. Therefore, in a case that a 3GPP network cannot identify a transmission protocol (unstructured data), or in a case that an application packs a plurality of service flows together for encryption and transmission, or in a case that a plurality of devices access a network by using a same terminal, at least one of an identifier of a service data flow or an identity of a device is configured, so that a network (for example, an operator network) can identify and control a service data flow to which a data packet belongs, thereby ensuring accuracy of transmission control.

### BRIEF DESCRIPTION OF DRAWINGS

FIG. 1 is a schematic diagram of an application scenario according to an embodiment of this application.
FIG. 2 is a schematic diagram of a scenario based on a 5G network system architecture.
FIG. 3 is a schematic diagram of another scenario based on a 5G network system architecture.
FIG. 4 is a schematic flowchart of a communication method according to an embodiment of this application.
FIG. 5 is a schematic flowchart of a communication method according to another embodiment of this application.
FIG. 6 is an exemplary flowchart of a communication method according to an embodiment of this application.
FIG. 7 is a schematic flowchart of a communication method according to still another embodiment of this application.
FIG. 8 is a schematic flowchart of a communication method according to yet another embodiment of this application.
FIG. 9 is a schematic flowchart of a communication method according to still yet another embodiment of this application.
FIG. 10 is another exemplary flowchart of a communication method according to an embodiment of this application.
FIG. 11 is a schematic diagram of a scenario in which a tunnel is established according to an embodiment of this application.
FIG. 12 is a schematic block diagram of a terminal according to an embodiment of this application.
FIG. 13 is a schematic block diagram of a first core network element according to an embodiment of this application.
FIG. 14 is a schematic block diagram of a communications device according to an embodiment of this application.
FIG. 15 is a schematic block diagram of a chip according to an embodiment of this application.
FIG. 16 is a schematic block diagram of a communications system according to an embodiment of this application.

### DESCRIPTION OF EMBODIMENTS

The following describes the technical solutions in embodiments of this application in combination with the accompanying drawings in embodiments of this application.

The technical solutions in embodiments of this application may be applied to various communications systems, for example, a long-term evolution (Long Term Evolution, LTE) system, an advanced long-term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (Non-Terrestrial Networks, NTN) system, a universal mobile telecommunications system (Universal Mobile Telecommunication System, UMTS), a wireless local area network (Wireless Local Area Networks, WLAN), wireless fidelity (Wireless Fidelity, WiFi), a fifth-generation (5th-Generation, 5G) system, or another communications system.

Generally, a quantity of connections supported by a conventional communications system is limited and is also easy to implement. However, with development of communications technologies, a mobile communications system not only supports conventional communication, but also supports, for example, device-to-device (Device to Device, D2D) communication, machine to machine (Machine to Machine, M2M) communication, machine type communication (Machine Type Communication, MTC), vehicle to vehicle (Vehicle to Vehicle, V2V) communication, or vehicle to everything (Vehicle to everything, V2X) communication. Embodiments of this application may also be applied to these communications systems. In a possible implementation, a communications system in embodiments of this application may be applied to a carrier aggregation (Carrier Aggregation, CA) scenario, a dual connectivity (Dual Connectivity, DC) scenario, or a standalone (Standalone, SA) networking scenario. In a possible implementation, a communications system in embodiments of this application may be applied to an unlicensed spectrum, and the unlicensed spectrum may also be considered as a shared spectrum. Alternatively, a communications system in embodiments of this application may be applied to a licensed spectrum, and the licensed spectrum may also be considered as a non-shared spectrum.

Embodiments of this application are described with reference to a network device and a terminal device. The terminal device may also be referred to as a user equipment (User Equipment, UE), an access terminal, a subscriber unit, a subscriber station, a mobile site, a mobile station, a remote station, a remote terminal, a mobile device, a user terminal, a terminal, a wireless communications device, a user agent, a user apparatus, or the like. The terminal device may be a station (STAION, ST) in a WLAN, a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communications system such as an NR network, a terminal device in a future evolved public land mobile network (Public Land Mobile Network, PLMN), or the like. In embodiments of this application, the terminal device may be deployed on land, including being indoors or outdoors, handheld, wearable, or vehicle-mounted. The terminal device may also be deployed on water (for example, on a ship), or may be deployed in the air (for example, on an airplane, an air balloon, or a satellite). In embodiments of this application, the terminal device may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like. By way of example rather than limitation, in embodiments of this application, the terminal device may alternatively be a wearable device. The wearable device may also be referred to as a wearable smart device, and is a general term for wearable devices, such as glasses, gloves, watches, clothes, and shoes, that are developed by performing smart design on daily wearing by using a wearable technology. The wearable device is a portable device that is directly worn on a body or integrated into clothes or accessories of a user. In addition to being a hardware device, the wearable device also implements a powerful function through software support, data interaction, and cloud interaction. In a broad sense, the wearable smart device includes a full-featured and large-sized device that may implement all or some functions without relying on a smartphone, for example, a smart watch or smart glasses, and a device that only focus on a specific type of application function and needs to be used in cooperation with another device such as a smartphone, for example, various smart bracelets and smart jewelries for physical sign monitoring.

In embodiments of this application, the network device may be a device configured to communicate with a mobile device. The network device may be an access point (Access Point, AP) in a WLAN, a base transceiver station (Base Transceiver Station, BTS) in GSM or CDMA, a Node B (NodeB, NB) in WCDMA, an evolved Node B (Evolutional Node B, eNB, or eNodeB) in LTE, a relay station or an access point, a vehicle-mounted device, a wearable device, a network device (gNB) in an NR network, a network device in a future evolved PLMN network, a network device in an NTN network, or the like. By way of example rather than limitation, in embodiments of this application, the network device may have a mobility characteristic. For example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, or a high elliptical orbit (High Elliptical Orbit, HEO) satellite. Optionally, the network device may alternatively be a base station disposed in a location such as land or water. In embodiments of this application, the network device may provide a service for a cell. The terminal device communicates with the network device by using a transmission resource (for example, a frequency domain resource or a spectrum resource) used by the cell. The cell may be a cell corresponding to the network device (for example, a base station). The cell may belong to a macro station or may belong to a base station corresponding to a small cell (Small cell). The small cell herein may include a metro cell (Metro cell), a micro cell (Micro cell), a pico cell (Pico cell), a femto cell (Femto cell), or the like. These small cells have a characteristic of small coverage and low transmit power, and are applicable to providing a high-rate data transmission service.

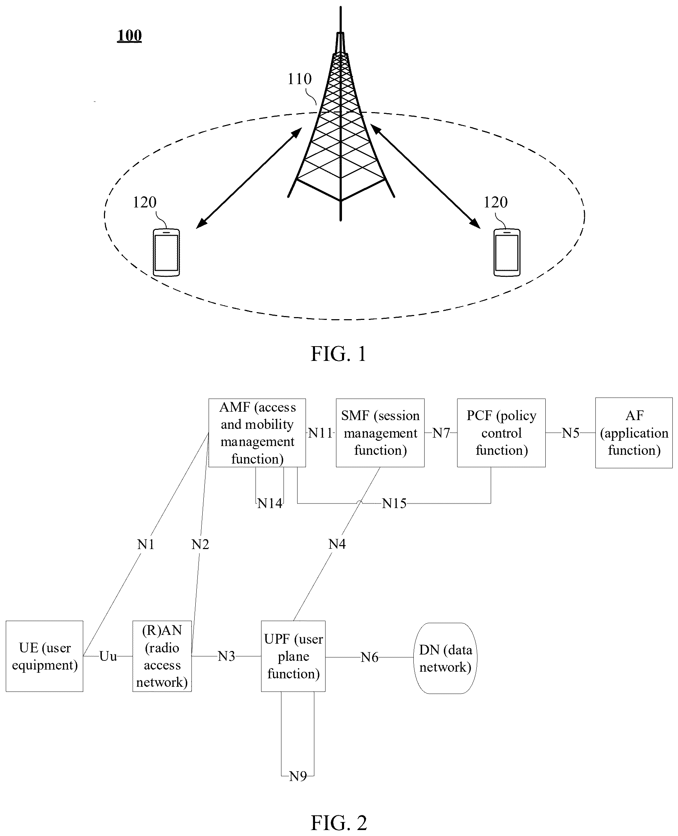

FIG. 1 exemplarily shows a communications system 100. The communications system includes one network device 110 and two terminal devices 120. In a possible implementation, the communications system 100 may include a plurality of network devices 110, and another quantity of terminal devices 120 may be included within coverage of each network device 110, which is not limited in embodiments of this application. In a possible implementation, the communications system 100 may further include another network entity such as a mobility management entity (Mobility Management Entity, MME) or an access and mobility management function (Access and Mobility Management Function, AMF), which is not limited in embodiments of this application. The network device may further include an access network device and a core network device. That is, the wireless communications system further includes a plurality of core networks configured to communicate with the access network device. The access network device may be an evolved node B (evolutional node B, which may be an eNB or an e-NodeB for short), a macro base station, a micro base station (also referred to as a "small cell"), a pico base station, an access point (access point, AP), a transmission point (transmission point, TP), or a new generation Node B (new generation Node B, gNodeB), or the like in a long-term evolution (long-term evolution, LTE) system, a next generation (mobile communications system) (next radio, NR) system, or an authorized auxiliary access long-term evolution (authorized auxiliary access long-term evolution, LAA-LTE) system. It should be understood that a device having a communication function in a network or a system in embodiments of this application may be referred to as a communications device. The communications system shown in FIG. 1 is used as an example. The communications device may include a network device and a terminal device that have a communication function. The network device and the terminal device may be specific devices in embodiments of this application. Details are not described herein again. The communications device may further include another device in the communications system, such as a network controller and a mobility management entity, which is not limited in embodiments of this application.

To facilitate understanding of embodiments of this application, the following briefly describes basic procedures and basic concepts involved in embodiments of this application. It should be understood that the following basic procedures and basic concepts are not limited in embodiments of this application.

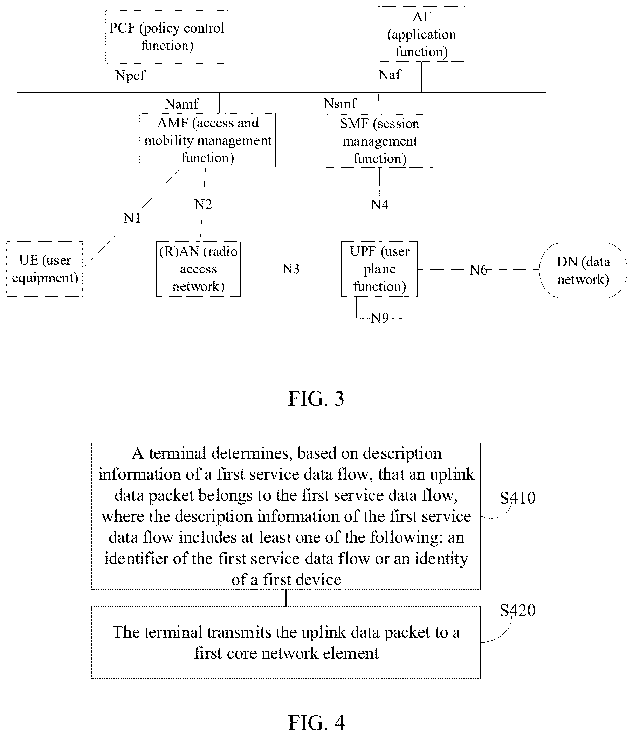

A 5G network system architecture is shown in FIG. 2 and FIG. 3. FIG. 2 shows that core network elements are connected to each other by using an agreed interface, and FIG. 3 shows that core network elements interact with each other by invoking a service provided by a network element. Specifically, FIG. 2 and FIG. 3 show that a UE performs access stratum connection, access stratum message interaction, and wireless data transmission with an (R)AN (radio access network, Radio Access Network) by using a Uu interface; and the UE performs NAS (non-access stratum, Non-Access Stratum) connection and NAS message interaction with an AMF (access and mobility management function, Access and Mobility Management Function) by using an N1 interface. In FIG. 2 and FIG. 3, the AMF is a mobility management function in a core network, and an SMF (session management function, Session Management Function) is a session management function in the core network. In addition to performing mobility management on the UE, the AMF is also responsible for forwarding a message related to session management between the UE and the SMF. A PCF (policy control function, Policy Control Function) is a policy management function in the core network, and is responsible for formulating policies related to mobility management, session management, charging, and the like of the UE. A UPF (user plane function, User Plane Function) is a user plane function in the core network, and performs data transmission with an external data network by using an N6 interface and data transmission with the (R)AN by using an N3 interface. Further, FIG. 3 shows that AMF interacts by invoking an Namf service, the PCF interacts by invoking an Npcf service, the SMF interacts by invoking an Nsmf service, and an AF interacts by invoking an Naf service.

In a related technology, a 5G network performs QoS control based on a QoS flow granularity, and one QoS flow may include a plurality of service data flows. For a downlink data packet (which, for example, may be a downlink data packet from a DN (data network, Data Network) shown in FIG. 2 or FIG. 3), the UPF matches the received downlink data packet with a filter of a service data flow, to determine a QoS (quality of service, Quality of Service) flow to which the service data flow belongs, so that the network performs QoS control on the QoS flow. For an uplink data packet, the UE matches the uplink data packet that needs to be transmitted with a filter of a service data flow, to determine a QoS flow to which the service data flow belongs, so that the network performs QoS control on the QoS flow.

The filter of the service data flow may be a packet header field in IP (internet protocol, Internet Protocol) or TCP (transmission control protocol, Transmission Control Protocol), which, for example, includes information such as an IP address and a port number; and/or, the filter of the service data flow may include a field in a MAC protocol packet header, which, for example, includes information such as a MAC address.

Further, specific content of a filter of a service data flow (or referred to as a data packet filter or a data packet filter set) currently defined in a 3GPP protocol is as follows:

IP packet filter set (IP Packet Filter Set): For an IP PDU session type, a packet filter set shall support packet filters based on at least any combination of (For IP PDU Session Type, the Packet Filter Set shall support Packet Filters based on at least any combination of): a source or destination IP address or an IPv6 prefix (Source/destination IP address or IPv6 prefix); a source or destination port number (Source/destination port number); a protocol ID of a protocol above IP or next header type (Protocol ID of the protocol above IP/Next header type); a type of service (TOS) (IPv4) or a traffic class (IPv6) and a mask (Type of Service (TOS) (IPv4)/Traffic class (IPv6) and Mask); a flow label (Flow Label) (IPv6); a security parameter index (Security parameter index); or a packet filter direction (Packet Filter direction).

Ethernet packet filter set (Ethernet Packet Filter Set): For an Ethernet PDU session type, a packet filter set shall support packet filters based on at least any combination of (For Ethernet PDU Session Type, the Packet Filter Set shall support Packet Filters based on at least any combination of): a source or destination MAC address (Source/destination MAC address); an Ethertype defined in IEEE 802.3[131] (Ethertype as defined in IEEE 802.3[131]; customer-VLAN tag (C-tag) and/or service-VLAN tag (S-tag) VID fields defined in IEEE Std 802.1Q[98] (Customer-VLAN tag (C-TAG) and/or Service-VLAN tag (S-TAG) VID fields as defined in IEEE Std 802.1Q[98]); customer-VLAN tag (C-tag) and/or service-VLAN tag (S-tag) PCP or DEI fields defined in IEEE Std 802.1Q[98] (Customer-VLAN tag (C-TAG) and/or Service-VLAN tag (S-TAG) PCP/DEI fields as defined in IEEE Std 802.1Q[98]); an IP packet filter set in a case that an Ethertype indicates an IPv4 or IPv6 payload (IP Packet Filter Set, in the case that Ethertype indicates IPv4/IPv6 payload); or a packet filter direction (Packet Filter direction).

It can be learned from the foregoing descriptions that, in a conventional technology, a device in a 3GPP (3rd generation partnership project, 3rd Generation Partnership Project) network needs to support configuration of a filter of a service data flow based on an IP protocol or a TCP protocol or a MAC protocol, and needs to parse and identify data packet headers that use a transmission protocol such as the IP protocol or the TCP protocol or a MAC address, thereby performing QoS control on the service data flow. However, with development of applications in various networks such as an internet and an internet of things, some data packets may be transmitted by using a transmission protocol (referred to as unstructured data in a 3GPP network) other than IP, TCP, and MAC that cannot be recognized by the current 3GPP network. In addition, some applications pack a plurality of service flows together for encryption and transmission. Further, in some scenarios, multiple tethered devices (tethered device) (such as wearable devices and notebook computers) access a network by using a same UE. The UE packs data from the plurality of devices together and transmits the data by using a same set of IP 5-tuples. In these cases, the 3GPP network cannot distinguish between data of different service types or data from different tethered devices, and therefore can only provide same quality of service but cannot provide fine-grained quality of service. As a result, user experience is affected.

It should be understood that the terms "system" and "network" may often be used interchangeably herein. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects. It should be understood that, the "indication" mentioned in embodiments of this application may be a direct indication or an indirect indication, or indicate an association. For example, if A indicates B, it may mean that A directly indicates B, for example, B may be acquired from A. Alternatively, it may mean that A indicates B indirectly, for example, A indicates C, and B may be acquired from C. Alternatively, it may mean that there is an association relationship between A and B. In the descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

To facilitate understanding of the technical solutions in embodiments of this application, the following describes related technologies in embodiments of this application. The following related technologies may be randomly combined with the technical solutions in embodiments of this application as optional solutions, which are all within the protection scope of embodiments of this application.

FIG. 4 is a schematic flowchart of a communication method according to an embodiment of this application. The method includes at least S410 and S420.

S410: A terminal determines, based on description information of a first service data flow, that an uplink data packet belongs to the first service data flow, where the description information of the first service data flow includes at least one of the following: an identifier of the first service data flow or an identity of a first device.

S420: The terminal transmits the uplink data packet to a first core network element.

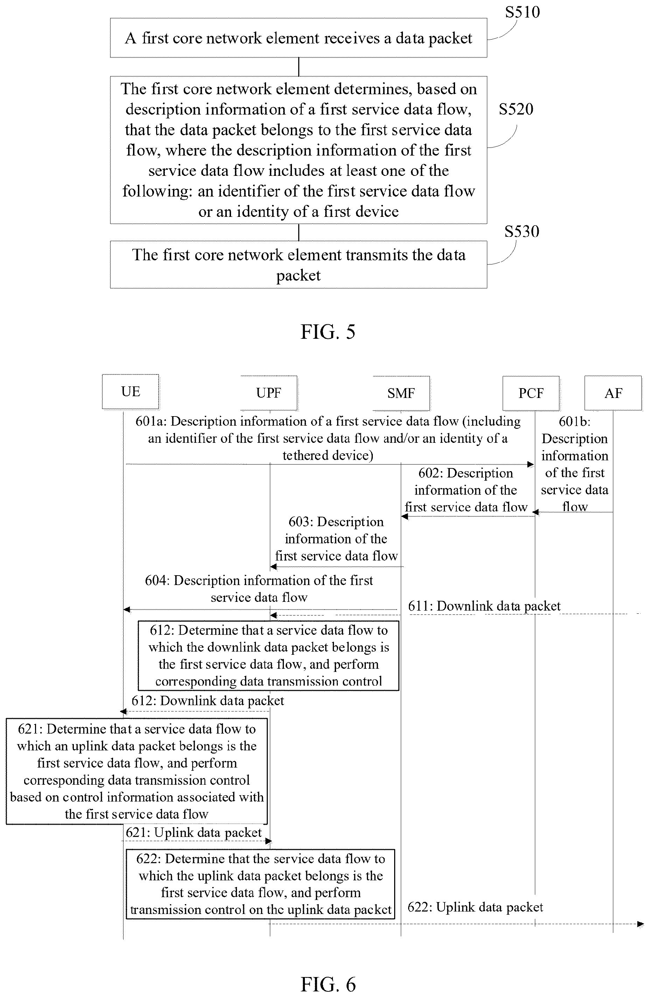

FIG. 5 is a schematic flowchart of a communication method according to another embodiment of this application. The method includes at least S510 to S530.

S510: A first core network element receives a data packet.

S520: The first core network element determines, based on description information of a first service data flow, that the data packet belongs to the first service data flow, where the description information of the first service data flow includes at least one of the following: an identifier of the first service data flow or an identity of a first device.

S530: The first core network element transmits the data packet.

Herein, the first core network element may include a user plane network element. Exemplarily, the user plane network element may include a UPF. It should be understood that, the foregoing description is merely an example. In actual processing, the first core network element is not limited to the UPF mentioned above, and all possible network elements included in the first core network element are not enumerated herein.

The first device may be one of one or more electronic devices that transmit data by using a terminal. Specifically, the first device is a device that transmits data or a data packet of the first service data flow by using the terminal.

Any electronic device that transmits data by using the terminal may be an electronic device that accesses a network by using the terminal and transmits an uplink data packet by using the terminal and/or receives a downlink data packet by using the terminal.

Exemplarily, any electronic device that transmits data by using the terminal may be referred to as a tethered device (Tethered Device), or may be referred to as any tethered device associated with the terminal. The first device may be one of one or more tethered devices associated with the terminal. For example, the terminal may be a mobile phone, and one or more tethered devices associated with the mobile phone may include at least one of the following: one or more wearable devices associated with the mobile phone, one or more notebook computers associated with the mobile phone, or the like. The first device may be a wearable device associated with the mobile phone or a notebook computer associated with the mobile phone.

In some possible implementations, before transmitting an uplink data packet and/or a downlink data packet of the first service data flow, the terminal and the first core network element need to obtain a filter of the first service data flow. The filter of the first service data flow includes the description information of the first service data flow.

Specifically, before the determining, by the terminal based on the description information of the first service data flow, that the uplink data packet belongs to the first service data flow, the method may further include: receiving, by the terminal, a filter of the first service data flow that is transmitted by a second core network element.

Before the receiving, by the first core network element, the data packet, the method may further include: receiving, by the first core network element, a filter of the first service data flow that is transmitted by a second core network element, where the filter of the first service data flow includes the description information of the first service data flow.

Correspondingly, processing of the second core network element may include: transmitting, by the second core network element, the filter of the first service data flow to the terminal; and transmitting, by the second core network element, the filter of the first service data flow to the first core network element.

A transmission occasion at which the second core network element transmits the filter of the first service data flow to the terminal may be the same as or different from a transmission occasion at which the second core network element transmits the filter of the first service data flow to the first core network element.

The second core network element may include at least one of the following: a mobility management network element, a session management network element, or a policy control network element. The mobility management network element may include an AMF, the session management network element may include an SMF, and the policy control network element may include a PCF.

In some embodiments, before transmitting the filter of the first service data flow to the terminal and transmitting the filter of the first service data flow to the first core network element, the second core network element may obtain the filter of the first service data flow from the terminal or an application function (AF).

Optionally, before the determining, by the terminal based on the description information of the first service data flow, that the uplink data packet belongs to the first service data flow, the method further includes: transmitting, by the terminal, a transmission request message of the first service data flow to a second core network element, where the transmission request message carries a filter of the first service data flow. Correspondingly, before the transmitting, by the second core network element, the filter of the first service data flow to the terminal and the transmitting, by the second core network element, the filter of the first service data flow to the first core network element, the method may include: receiving, by the second core network element, the transmission request message transmitted by the terminal, where the transmission request message carries the filter of the first service data flow.

In this case, before the transmitting, by the terminal, the transmission request message of the first service data flow to the second core network element, the method may further include: synchronizing, between the terminal and an AF, the filter of the first service data flow.

Optionally, processing of the AF may include: transmitting, by the AF, the transmission request message of the first service data flow to the second core network element, where the transmission request message carries the filter of the first service data flow. That is, before the transmitting, by the second core network element, the filter of the first service data flow to the terminal and the transmitting, by the second core network element, the filter of the first service data flow to the first core network element, the method may include: receiving, by the second core network element, the transmission request message transmitted by the AF, where the transmission request message carries the filter of the first service data flow.

In this case, before the transmitting, by the AF, the transmission request message of the first service data flow to the second core network element, the method may further include: synchronizing, between the terminal and the AF, the filter of the first service data flow.

In some embodiments, the filter of the first service data flow includes at least the description information of the first service data flow. That is, the filter of the first service data flow includes at least one of the following: the identifier of the first service data flow or the identity of the first device. In this case, the process of synchronizing, between the terminal and the AF, the filter of the first service data flow may include at least one of the following: synchronizing, between the terminal and the AF, the identifier of the first service data flow; or synchronizing, between the terminal and the AF, the identity of the first device.

Further, in addition to the description information of the first service data flow, the filter of the first service data flow may include a filter field defined in a related protocol corresponding to the first service data flow. The filter field defined in the related protocol may include at least one of the following: an IP address, a port number, a MAC address, or the like. In this case, in addition to synchronizing, between the terminal and the AF, the identifier of the first service data flow and/or synchronizing, between the terminal and the AF, the identity of the first device, the processing of synchronizing, between the terminal and the AF, the filter of the first service data flow may include: synchronizing, between the terminal and the AF, the filter field defined in the related protocol corresponding to the first service data flow.

It should be understood that, the description herein is merely an example. In actual processing, the filter of the first service data flow may further include other fields with more content or in more types, which, however, are not enumerated in embodiments of this application. As long as the filter of the first service data flow includes the description information of the first service data flow, the filter of the first service data flow is within the protection scope of embodiments of this application.

In an embodiment, the process of synchronizing, between the terminal and the AF, the identifier of the first service data flow may include: allocating, by the AF, the identifier of the first service data flow; and interacting, by the AF with the terminal by using an application layer, to synchronize the identifier of the first service data flow to the terminal.

Optionally, the identifier of the first service data flow may be the same as a flow identifier of the first service data flow in an upper-layer protocol.

For example, the upper-layer protocol corresponding to the first service data flow is a transmission protocol (unstructured data) that cannot be recognized by a 3GPP network, for example, a QUIC (Quick UDP Internet Connection) protocol. In this case, the AF may use a stream ID (flow identifier) of the first service data flow in the QUIC protocol as the identifier of the first service data flow. Then, the AF may interact with the terminal by using the application layer, to synchronize the identifier of the first service data flow to the terminal.

Optionally, the identifier of the first service data flow may be different from the flow identifier of the first service data flow in the upper-layer protocol, and there is a correspondence between the identifier of the first service data flow and the flow identifier of the first service data flow in the upper-layer protocol.

The process of synchronizing, between the terminal and the AF, the identifier of the first service data flow may include: allocating, by the AF, the identifier of the first service data flow, and determining, by the AF, a correspondence between the identifier of the first service data flow and the flow identifier of the first service data flow; and interacting, by the AF with the terminal by using the application layer, to synchronize the identifier of the first service data flow and the correspondence between the flow identifier of the first service data flow and the identifier of the first service data flow to the terminal.

The upper-layer protocol corresponding to the first service data flow being the QUIC protocol is still used as an example. Assuming that the stream ID (flow identifier) of the first service data flow in the QUIC protocol is "001", the AF may allocate "a1" as the identifier of the first service data flow, and determine the correspondence between the flow identifier of the first service data flow and the identifier of the first service data flow. In this case, the AF may interact with the terminal by using the application layer, to synchronize the identifier of the first service data flow to the terminal, and further synchronize the correspondence between the stream ID (flow identifier) of the first service data flow and the identifier of the first service data flow to the terminal.

In an embodiment, the process of synchronizing, between the terminal and the AF, the identifier of the first service data flow may include: allocating, by the terminal, the identifier of the first service data flow; and interacting, by the terminal with the AF by using an application layer, to synchronize the identifier of the first service data flow to the AF.

Optionally, the identifier of the first service data flow may be the same as a flow identifier of the first service data flow in an upper-layer protocol. In this example, a manner in which the terminal allocates the identifier of the first service data flow is similar to the manner in which the AF allocates the identifier of the first service data flow in the foregoing example, and is not described again.

Optionally, the identifier of the first service data flow may be different from the flow identifier of the first service data flow in the upper-layer protocol, and there is a correspondence between the identifier of the first service data flow and the flow identifier of the first service data flow in the upper-layer protocol. In this example, a manner in which the terminal allocates the identifier of the first service data flow and the correspondence between the identifier of the first service data flow and the flow identifier of the first service data flow are similar to the manner in which the AF allocates the identifier of the first service data flow and the correspondence between the identifier of the first service data flow and the flow identifier of the first service data flow in the foregoing example, and are not described again.

It should be noted that, the process of synchronizing, between the terminal and the AF, the identifier of the first service data flow in the foregoing embodiments may include: synchronizing, between the terminal and the AF, an identifier of each service data flow in one or more service data flows, where the one or more service data flows include the first service data flow. Herein, the identifiers of all the service data flows may be allocated and synchronized between the terminal and the AF at one time. Alternatively, the identifiers of different service data flows may be separately allocated and synchronized between the terminal and the AF. It should be understood that, regardless of whether the identifiers of all the service data flows are allocated and synchronized between the terminal and the AF at one time, or the identifiers of different service data flows are separately allocated and synchronized between the terminal and the AF, except that upper layer protocols corresponding to different service data flows may be different, a manner of synchronizing the identifier of each service data flow between the terminal and the AF is the same as the manner of synchronizing the identifier of the first service data flow between the terminal and the AF in the foregoing example. Therefore, a manner of allocating or determining the identifier of each service data flow is not described herein again.

In an embodiment, the process of synchronizing, between the terminal and the AF, the identity of the first device may include: acquiring, by the terminal, the identity of the first device; and interacting, by the terminal with the AF by using an application layer, to synchronize the identity of the first device to the AF.

Optionally, the process of acquiring, by the terminal, the identity of the first device may include: directly acquiring, by the terminal, the identity of the first device from the first device.

In this case, the identity of the first device may refer to an ID (ID) of the first device. The ID may include but is not limited to at least one of the following: a number, a sequence number, a name, an SUPI (Subscription Permanent Identifier, subscription permanent identifier), an SUCI (Subscription Concealed Identifier, subscription concealed identifier), a PEI (Permanent Equipment Identifier, permanent equipment identifier), a 5G-GUTI (5G Globally Unique Temporary Identifier, 5G globally unique temporary identifier), an internal-group identifier (IGI, internal-group identifier), a GPSI (Generic Public Subscription Identifier, generic public subscription identifier), or the like.

Optionally, the process of acquiring, by the terminal, the identity of the first device may include: directly allocating, by the terminal, the identity of the first device to the first device.

In this case, because the first device is a tethered device associated with the terminal, the terminal may allocate an identity to the tethered device associated with the terminal, and there may be a correspondence between the identity allocated by the terminal to the first device and the ID of the first device. That is, the process of allocating, by the terminal, the identity of the first device to the first device may include: allocating, by the terminal, the identity of the first device to the first device, and determining, by the terminal, the correspondence between the identity of the first device and the ID of the first device. Correspondingly, the process of interacting, by the terminal with the AF by using the application layer, to synchronize the identity of the first device to the AF may include: interacting, by the terminal with the AF by using the application layer, to synchronize the identity of the first device and the correspondence between the identity of the first device and the ID of the first device to the AF.

A specific manner in which the terminal allocates the identity of the first device is not limited herein, and is within the protection scope of embodiments of this application as long as the terminal and network elements on a core network side can uniquely identify the first device by using the identity of the first device.

It should be noted that, the process of synchronizing, between the terminal and the AF, the identity of the first device in the foregoing embodiments may include: synchronizing, between the terminal and the AF, identities of one or more tethered devices, where the one or more tethered devices include the first device. Herein, the identities of all the tethered devices may be synchronized between the terminal and the AF at one time. Alternatively, identities of different tethered devices may be separately synchronized between the terminal and the AF. It should be understood that, regardless of whether the identities of all the tethered devices are synchronized between the terminal and the AF at one time, or the identities of different tethered devices are separately synchronized between the terminal and the AF, a manner in which the terminal obtains the identity of each tethered device is the same as the manner in which the terminal obtains the identity of the first device in the foregoing embodiments. Therefore, details are not described herein again.

In some possible implementations, before the terminal and the first core network element transmit an uplink data packet and/or a downlink data packet of the first service data flow, the terminal and the first core network element may further obtain control information associated with the first service data flow.

Specifically, before the determining, by the terminal based on the description information of the first service data flow, that the uplink data packet belongs to the first service data flow, the method may further include: receiving, by the terminal, control information associated with the first service data flow that is transmitted by a second core network element.

Before the receiving, by the first core network element, the data packet, the method may further include: receiving, by the terminal, control information associated with the first service data flow that is transmitted by a second core network element.

Correspondingly, processing of the second core network element may include: transmitting, by the second core network element, the control information associated with the first service data flow to the terminal; and transmitting, by the second core network element, the control information associated with the first service data flow to the first core network element.

The second core network element may transmit the control information associated with the first service data flow and the filter of the first service data flow to the terminal through a same message, for example, a first message. That is, the second core network element may transmit the first message to the terminal. Processing of the terminal may include: receiving, by the terminal, the first message transmitted by the second core network element, where the first message may carry the control information associated with the first service data flow and the filter of the first service data flow.

The second core network element may transmit the control information associated with the first service data flow and the filter of the first service data flow to the first core network element through a same message, for example, a second message. That is, the second core network element may transmit the second message to the first core network element. Processing of the first core network element may include: receiving, by the first core network element, the second message transmitted by the second core network element, where the second message may carry the control information associated with the first service data flow and the filter of the first service data flow.

A transmission occasion of the first message and a transmission occasion of the second message may be configured in any sequence. For example, the second core network element may transmit the first message and the second message at the same time, or the second core network element may transmit the first message before the second message, or the second core network element may transmit the second message before the first message.

In an embodiment, before transmitting the control information associated with the first service data flow to the terminal and transmitting the control information associated with the first service data flow to the first core network element, the second core network element may obtain the filter of the first service data flow from the terminal or an application function (AF). A manner in which the second core network element obtains the filter of the first service data flow from the terminal or the AF is the same as the manner in the foregoing embodiments, and is not described again. A specific manner in which the second core network element determines the control information associated with the first service data flow is not limited in embodiments of this application.

In an embodiment, the control information associated with the first service data flow includes at least one of the following: a radio resource associated with the first service data flow, a bit rate associated with the first service data flow, a quality of service QoS parameter associated with the first service data flow, a gating parameter associated with the first service data flow, a charging parameter associated with the first service data flow, or a data flow identifier associated with the first service data flow.

The radio resource may include a time domain resource and/or a frequency domain resource. The gating parameter may be a gating control parameter. The data flow identifier associated with the first service data flow includes at least one of the following: the identifier of the first service data flow or a QoS flow identifier associated with the first service data flow.

Optionally, the control information associated with the first service data flow that is transmitted by the second core network element to the terminal may be the same as the control information associated with the first service data flow that is transmitted by the second core network element to the first core network element.

For example, both the control information associated with the first service data flow that is transmitted by the second core network element to the terminal and the control information associated with the first service data flow that is transmitted by the second core network element to the first core network element may include at least one of the following: a radio resource associated with the first service data flow, a bit rate associated with the first service data flow, a quality of service QoS parameter associated with the first service data flow, a gating parameter associated with the first service data flow, a charging parameter associated with the first service data flow, or a data flow identifier associated with the first service data flow.

Optionally, the control information associated with the first service data flow that is transmitted by the second core network element to the terminal may be at least partially different from the control information associated with the first service data flow that is transmitted by the second core network element to the first core network element.

For example, the control information associated with the first service data flow that is transmitted by the second core network element to the terminal is mainly used by the terminal to perform transmission control on an uplink data packet that belongs to the first service data flow. Correspondingly, the control information associated with the first service data flow that is transmitted by the second core network element to the terminal may include at least one of the following: the radio resource associated with the first service data flow, the bit rate associated with the first service data flow, the data flow identifier associated with the first service data flow, or the like.

The control information associated with the first service data flow that is transmitted by the second core network element to the first core network element is mainly used by the first core network element to perform transmission control on an uplink data packet that belongs to the first service data flow and/or a downlink data packet that belongs to the first service data flow. Correspondingly, the control information associated with the first service data flow that is transmitted by the second core network element to the first core network element may include at least one of the following: a bit rate associated with the first service data flow, a quality of service QoS parameter associated with the first service data flow, a gating parameter associated with the first service data flow, a charging parameter associated with the first service data flow, a data flow identifier associated with the first service data flow, or the like.

It should be understood that, the foregoing description is merely an example, and parameters that may be respectively included in the control information associated with the first service data flow that is transmitted by the second core network element to the terminal and the control information associated with the first service data flow that is transmitted by the second core network element to the first core network element are not limited or enumerated herein.

In some possible implementations, the process of determining, by the terminal based on the description information of the first service data flow, that the uplink data packet belongs to the first service data flow includes at least one of the following: receiving, by the terminal, the uplink data packet transmitted by the first device; and determining, by the terminal, that the uplink data packet belongs to the first service data flow in a case that the description information of the first service data flow includes the identity of the first device, or determining, by the terminal, that the uplink data packet belongs to the first service data flow in a case that a flow identifier carried in the uplink data packet matches the identifier of the first service data flow in the description information of the first service data flow.

In an embodiment, the terminal may receive an uplink data packet transmitted by each tethered device in one or more tethered devices associated with the terminal. The first device is one of the one or more tethered devices associated with the terminal, and therefore the terminal may receive an uplink data packet transmitted by the first device.

In one case, the description information of the first service data flow includes only the identity of the first device.

The process of determining, by the terminal based on the description information of the first service data flow, that the uplink data packet belongs to the first service data flow may only include: receiving, by the terminal, the uplink data packet transmitted by the first device; and determining, by the terminal, that the uplink data packet belongs to the first service data flow in a case that the description information of the first service data flow includes the identity of the first device. In addition, the method may further include: determining that the uplink data packet does not belong to the first service data flow in a case that the description information of the first service data flow does not include the identity of the first device.

In one case, the description information of the first service data flow includes only the identifier of the first service data flow.

The process of determining, by the terminal based on the description information of the first service data flow, that the uplink data packet belongs to the first service data flow may only include: receiving, by the terminal, the uplink data packet transmitted by the first device; and determining, by the terminal, that the uplink data packet belongs to the first service data flow in a case that a flow identifier carried in the uplink data packet matches the identifier of the first service data flow in the description information of the first service data flow.

Specifically, the process of determining, by the terminal, that the uplink data packet belongs to the first service data flow in the case that the flow identifier carried in the uplink data packet matches the identifier of the first service data flow in the description information of the first service data flow may include: extracting, by the terminal, the flow identifier from the uplink data packet; determining, by the terminal, whether the flow identifier carried in the uplink data packet matches the identifier of the first service data flow in the description information of the first service data flow; and determining, by the terminal, that the uplink data packet belongs to the first service data flow in a case that the flow identifier carried in the uplink data packet matches the identifier of the first service data flow in the description information of the first service data flow. In addition, the method may further include: determining that the uplink data packet does not belong to the first service data flow in a case that the flow identifier carried in the uplink data packet does not match the identifier of the first service data flow in the description information of the first service data flow.

The process of determining whether the flow identifier carried in the uplink data packet matches the identifier of the first service data flow in the description information of the first service data flow may include: determining whether the flow identifier carried in the uplink data packet is the same as the identifier of the first service data flow in the description information of the first service data flow, or determining whether there is a correspondence between the flow identifier carried in the uplink data packet and the identifier of the first service data flow in the description information of the first service data flow. A manner in which the terminal side acquires the correspondence between the identifier of the first service data flow and the flow identifier of the first service data flow has been described in detail in the foregoing embodiments, and is not described herein again.

In one case, the description information of the first service data flow includes the identifier of the first service data flow and the identity of the first device.

The process of determining, by the terminal based on the description information of the first service data flow, that the uplink data packet belongs to the first service data flow may include: receiving, by the terminal, the uplink data packet transmitted by the first device; and determining, by the terminal, that the uplink data packet belongs to the first service data flow in a case that the description information of the first service data flow includes the identity of the first device, and the flow identifier carried in the uplink data packet matches the identifier of the first service data flow in the description information of the first service data flow.

In an embodiment, a to-be-transmitted uplink data packet on the terminal side may be generated by the terminal. In embodiments of this embodiment, after the terminal generates the uplink data packet, the terminal may determine, based on the description information of the first service data flow, that the uplink data packet belongs to the first service data flow.

In embodiments of this application, the description information of the first service data flow needs to include at least the identifier of the first service data flow. Correspondingly, the process of determining, by the terminal based on the description information of the first service data flow, that the uplink data packet belongs to the first service data flow may include: determining, by the terminal, that the uplink data packet belongs to the first service data flow in a case that the flow identifier carried in the uplink data packet matches the identifier of the first service data flow in the description information of the first service data flow. Detailed descriptions of this processing are the same as the detailed descriptions in the foregoing embodiments, and are not described again.

It should be understood that, in embodiments of this application, whether the description information of the first service data flow includes the identity of the first device is not limited. In a case that the description information of the first service data flow includes the identifier of the first service data flow and the identity of the first device, the terminal may not use the identity of the first device in the description information of the first service data flow to perform respective determining. Therefore, details are not described herein again.

In some possible implementations, after the determining, by the terminal based on the description information of the first service data flow, that the uplink data packet belongs to the first service data flow, and before the transmitting, by the terminal, the uplink data packet to the first core network element, the method may further include: adding, by the terminal, at least one of the following in a header of the uplink data packet: the identifier of the first service data flow or the identity of the first device.

In one case, the description information of the first service data flow includes only the identity of the first device. In this case, before the transmitting, by the terminal, the uplink data packet to the first core network element, the method may further include: adding, by the terminal, the identity of the first device in a header of the uplink data packet.

In one case, the description information of the first service data flow includes only the identifier of the first service data flow. In this case, before the transmitting, by the terminal, the uplink data packet to the first core network element, the method may further include: adding, by the terminal, the identifier of the first service data flow in a header of the uplink data packet.

In one case, the description information of the first service data flow includes the identifier of the first service data flow and the identity of the first device. In this case, before the transmitting, by the terminal, the uplink data packet to the first core network element, the method may further include: adding, by the terminal, at least one of the following in a header of the uplink data packet: the identifier of the first service data flow or the identity of the first device.

In some possible implementations, the terminal may transmit the uplink data packet to the first core network element.

The process of transmitting, by the terminal, the uplink data packet to the first core network element includes: transmitting, by the terminal, the uplink data packet to the first core network element based on control information associated with the first service data flow.

The process of transmitting, by the terminal, the uplink data packet to the first core network element based on the control information associated with the first service data flow may include: transmitting, by the terminal based on the control information associated with the first service data flow, the uplink data packet to the first core network element by using an access network device. The access network device may be an access network device that serves the terminal.

Optionally, the control information associated with the first service data flow on the terminal side may include a part or all of: a radio resource associated with the first service data flow, a bit rate associated with the first service data flow, a quality of service QoS parameter associated with the first service data flow, a gating parameter associated with the first service data flow, a charging parameter associated with the first service data flow, or a data flow identifier associated with the first service data flow.

For example, the control information associated with the first service data flow may include the radio resource associated with the first service data flow and the bit rate associated with the first service data flow. The process of transmitting, by the terminal based on the control information associated with the first service data flow, the uplink data packet to the first core network element by using the access network device may include: transmitting, by the terminal based on the radio resource associated with the first service data flow and the bit rate associated with the first service data flow, the uplink data packet to the first core network element by using the access network device. It should be understood that, the description herein is merely an example. In actual processing, the control information associated with the first service data flow that is received by the terminal may include a parameter other than the foregoing parameters, and is not limited or enumerated herein.

In some possible implementations, the first core network element receives a data packet, where the data packet is an uplink data packet.

In implementations, the process of determining, by the first core network element based on the description information of the first service data flow, that the data packet belongs to the first service data flow includes at least one of the following: determining, by the first core network element, that the data packet belongs to the first service data flow, in a case that a service data flow identifier carried in a header of the data packet is the same as the identifier of the first service data flow in the description information of the first service data flow; or determining, by the first core network element, that the data packet belongs to the first service data flow, in a case that a device identity carried in a header of the data packet is the same as the identity of the first device in the description information of the first service data flow.

In implementations, the data packet is an uplink data packet. Specifically, the process of receiving, by the first core network element, the data packet includes: receiving, by the first core network element, the uplink data packet transmitted by a terminal.

Correspondingly, the process of determining, by the first core network element based on the description information of the first service data flow, that the data packet belongs to the first service data flow includes at least one of the following: determining, by the first core network element, that the uplink data packet belongs to the first service data flow, in a case that a service data flow identifier carried in a header of the uplink data packet is the same as the identifier of the first service data flow in the description information of the first service data flow; or determining, by the first core network element, that the uplink data packet belongs to the first service data flow, in a case that a device identity carried in a header of the uplink data packet is the same as the identity of the first device in the description information of the first service data flow.

Specifically, the process of determining, by the first core network element based on the description information of the first service data flow, that the data packet belongs to the first service data flow includes one of the following:
determining, by the first core network element, that the uplink data packet belongs to the first service data flow, in a case that the header of the uplink data packet carries only the device identity, and the device identity carried in the header of the uplink data packet is the same as the identity of the first device in the description information of the first service data flow;
determining, by the first core network element, that the uplink data packet belongs to the first service data flow, in a case that the header of the uplink data packet carries only the service data flow identifier, and the service data flow identifier carried in the header of the uplink data packet is the same as the identifier of the first service data flow in the description information of the first service data flow; or
determining, by the first core network element, that the uplink data packet belongs to the first service data flow, in a case that the header of the uplink data packet carries the service data flow identifier and the device identity, the service data flow identifier carried in the header of the uplink data packet is the same as the identifier of the first service data flow in the description information of the first service data flow, and the device identity carried in the header of the uplink data packet is the same as the identity of the first device in the description information of the first service data flow.

In addition, the method may further include: determining, by the first core network element, that the uplink data packet does not belong to the first service data flow, in a case that the service data flow identifier carried in the header of the uplink data packet is different from the identifier of the first service data flow in the description information of the first service data flow, and/or the device identity carried in the header of the uplink data packet is different from the identity of the first device in the description information of the first service data flow.

In implementations, the process of transmitting, by the first core network element, the data packet includes: transmitting, by the first core network element, the uplink data packet to an application server based on control information associated with the first service data flow. All content that may be included in the control information associated with the first service data flow is the same as the content in the foregoing embodiments. Details are not described herein again.

The control information associated with the first service data flow that is received by the first core network element may include a part or all of: a radio resource associated with the first service data flow, a bit rate associated with the first service data flow, a quality of service QoS parameter associated with the first service data flow, a gating parameter associated with the first service data flow, a charging parameter associated with the first service data flow, or a data flow identifier associated with the first service data flow.

For example, the control information associated with the first service data flow may include: the bit rate associated with the first service data flow, the gating parameter associated with the first service data flow, and the charging parameter associated with the first service data flow. The process of transmitting, by the first core network element, the uplink data packet to the application server based on the control information associated with the first service data flow may include: controlling, by the first core network element, transmission of the uplink data packet to the application server based on the bit rate associated with the first service data flow, the gating parameter associated with the first service data flow, and a charging parameter associated with the first service data flow. It should be understood that, the description herein is merely an example. In actual processing, the control information associated with the first service data flow that is received by the first core network element may include a parameter other than the foregoing parameters, and is not limited or enumerated herein.

In some possible implementations, the first core network element receives a data packet, where the data packet is a downlink data packet.

In implementations, the process of determining, by the first core network element based on the description information of the first service data flow, that the data packet belongs to the first service data flow includes at least one of the following: determining, by the first core network element, that the data packet belongs to the first service data flow, in a case that a service data flow identifier carried in a header of the data packet is the same as the identifier of the first service data flow in the description information of the first service data flow; or determining, by the first core network element, that the data packet belongs to the first service data flow, in a case that a device identity carried in a header of the data packet is the same as the identity of the first device in the description information of the first service data flow.

In implementations, the data packet is a downlink data packet. Specifically, the process of receiving, by the first core network element, the data packet includes: receiving, by the first core network element, the downlink data packet transmitted by an application server.

Correspondingly, the process of determining, by the first core network element based on the description information of the first service data flow, that the data packet belongs to the first service data flow includes at least one of the following: determining, by the first core network element, that the downlink data packet belongs to the first service data flow, in a case that a service data flow identifier carried in a header of the downlink data packet is the same as the identifier of the first service data flow in the description information of the first service data flow; or determining, by the first core network element, that the downlink data packet belongs to the first service data flow, in a case that a device identity carried in a header of the downlink data packet is the same as the identity of the first device in the description information of the first service data flow.

Specifically, the process of determining, by the first core network element based on the description information of the first service data flow, that the data packet belongs to the first service data flow includes one of the following:
determining, by the first core network element, that the downlink data packet belongs to the first service data flow, in a case that the header of the downlink data packet carries only the device identity, and the device identity carried in the header of the downlink data packet is the same as the identity of the first device in the description information of the first service data flow;
determining, by the first core network element, that the downlink data packet belongs to the first service data flow, in a case that the header of the downlink data packet carries only the service data flow identifier, and the service data flow identifier carried in the header of the downlink data packet is the same as the identifier of the first service data flow in the description information of the first service data flow; or
determining, by the first core network element, that the uplink data packet belongs to the first service data flow, in a case that the header of the downlink data packet carries the service data flow identifier and the device identity, the service data flow identifier carried in the header of the downlink data packet is the same as the identifier of the first service data flow in the description information of the first service data flow, and the device identity carried in the header of the downlink data packet is the same as the identity of the first device in the description information of the first service data flow.

In addition, the method may further include: determining, by the first core network element, that the downlink data packet does not belong to the first service data flow, in a case that the service data flow identifier carried in the header of the downlink data packet is different from the identifier of the first service data flow in the description information of the first service data flow, and/or the device identity carried in the header of the downlink data packet is different from the identity of the first device in the description information of the first service data flow.

In implementations, the process of transmitting, by the first core network element, the data packet includes: transmitting, by the first core network element, the downlink data packet to a terminal based on control information associated with the first service data flow. All content that may be included in the control information associated with the first service data flow is the same as the content in the foregoing embodiments. Details are not described herein again.

For example, the control information associated with the first service data flow on the first core network element side may include: a bit rate associated with the first service data flow, a quality of service QoS parameter associated with the first service data flow, a gating parameter associated with the first service data flow, a charging parameter associated with the first service data flow, or a data flow identifier associated with the first service data flow. The process of transmitting, by the first core network element, the downlink data packet to the terminal based on the control information associated with the first service data flow may include: adding, by the first core network element, the data flow identifier associated with the first service data flow to the downlink data packet; performing, by the first core network element, control based on the QoS parameter associated with the first service data flow, the bit rate associated with the first service data flow, the gating parameter associated with the first service data flow, and the charging parameter associated with the first service data flow; and transmitting, by the first core network element, the downlink data packet to the terminal by using an access network device. The access network device is an access network device that serves the terminal. It should be understood that, the description herein is merely an example. In actual processing, the control information associated with the first service data flow that is received by the first core network element may include a parameter other than the foregoing parameters, and is not limited or enumerated herein.

It should be understood that, the foregoing describes a case in which the terminal and the first core network element transmit an uplink data packet that belongs to the first service data flow and/or a downlink data packet that belongs to the first service data flow. In actual processing, if both the terminal and the first core network element obtain description information (a filter) of each service data flow in a plurality of service data flows and control information of each service data flow, the terminal and the first core network element may further perform corresponding transmission control on an uplink data packet and/or a downlink data packet that belongs to each service data flow. In this case, transmission control on an uplink data packet and/or a downlink data packet that belongs to each service data flow is the same as transmission control on an uplink data packet and/or a downlink data packet that belongs to the first service data flow. Therefore, for brevity, transmission control on an uplink data packet and/or a downlink data packet that belongs to each service data flow is not described in this application.

According to the foregoing solutions, at least one of an identifier of a first service data flow or an identity of a first device is added in description information of the first service data flow, so that during transmission of a data packet, the data packet may be matched with the description information of the first service data flow, to determine a service data flow to which data belongs. In this way, transmission control on the data packet can be implemented based on the service data flow to which the data packet belongs. Therefore, in a case that a 3GPP network cannot identify a transmission protocol (unstructured data), or in a case that an application packs a plurality of service flows together for encryption and transmission, or in a case that a plurality of tethered devices access a network by using a same UE, a network (for example, an operator network) can identify and control a service data flow to which a data packet belongs, thereby ensuring accuracy of transmission control.

With reference to FIG. 6, the foregoing communication method is described by using an example in which the terminal is a UE, the first core network element is a UPF, and the second core network element includes an SMF and a PCF.

Step 601a: The UE requests the PCF located in a core network to transmit a specific service data flow. The UE may directly transmit a message for requesting to transmit the specific service data flow to the PCF, or the UE may forward the message for requesting to transmit the specific service data flow to the PCF by using another network element (for example, an NEF, an AMF, or the SMF).

Step 601b: An AF requests the PCF located in the core network to transmit the specific service data flow. The AF may directly transmit a message for requesting to transmit the specific service data flow to the PCF, or the AF may forward the message for requesting to transmit the specific service data flow to the PCF by using another network element (for example, the NEF, the AMF, or the SMF).

Any one of step 601a or step 601b may be executed, that is, in actual processing, step 601a or step 601b may be executed.

The message for requesting to transmit the specific service data flow in step 601a or step 601b may be the transmission request message in the foregoing embodiments, and the specific service data flow may include at least the first service data flow in the foregoing embodiments. Specifically, the message for requesting to transmit the specific service data flow carries the description information of the first service data flow (that is, the filter of the first service data flow). The description information of the first service data flow may be the identifier of the first service data flow and/or an identity of a tethered device that performs data transmission by using the UE (that is, the identity of the first device in the foregoing embodiments is referred to as the identity of the tethered device in this example). Alternatively, the description information of the first service data flow may be the identifier of the first service data flow or an identity of a tethered device, and is combined with an existing defined filter field (for example, an IP address, a port number, or a MAC address) of a service data flow.

In addition, before step 601a and step 601b are executed, the AF may interact with the UE by using an application layer, to determine the identifier of the first service data flow and the identity of the tethered device.

For example, for a transmission protocol (unstructured data) that cannot be identified by a 3GPP network, the AF or the UE allocates a service data flow identifier to each service data flow, and exchanges, by using the application layer, the service data flow identifier synchronously allocated by the AF and the UE. For example, the AF or the UE uses a flow identifier in an upper-layer protocol as the service data flow identifier. For example, a stream ID in a QUIC (Quick UDP Internet Connection) protocol is used as the service data flow identifier. QUIC is an encrypted transmission protocol, and a network element in an operator network cannot parse encrypted information in a QUIC data packet.

For example, the UE determines the identity of the tethered device, and the AF obtains, through interaction by using the application layer, the identity of the tethered device that is determined by the UE. The UE may obtain the identity of the tethered device from the tethered device, or the UE allocates the identity to the tethered device.

In step 602 to step 604, the PCF transmits the description information of the first service data flow to the UPF and/or the UE by using the SMF.

Specifically, in step 602, the PCF transmits the description information of the authorized first service data flow to the SMF. Step 603: The SMF transmits the description information of the first service data flow to the UPF. Step 604: The SMF transmits the description information of the first service data flow to the UE.

Further, the PCF may provide the UPF and/or the UE with the description information of the first service data flow and the control information for the first service data flow by using the SMF. The control information includes, for example, a QoS parameter, a gating parameter, a charging parameter, and a flow identifier allocated by a network (that is, the data flow identifier associated with the first service data flow in the foregoing embodiments).

Step 611: For downlink data, the AF adds a service data flow identifier and/or a device identity in a header of a downlink data packet, and transmits the downlink data packet to the UPF. In this step, the downlink data packet may be transmitted by the AF to the UPF, or may be received by the AF from another device and transmitted to the UPF. Therefore, a source of the downlink data packet in step 611 of FIG. 6 is not the AF.

Step 612: The UPF determines that a service data flow to which the downlink data packet belongs is the first service data flow, performs corresponding data transmission control based on the control information associated with the first service data flow, and transmits the downlink data packet to the terminal by using an access network device.

Specifically, the process of determining, by the UPF, that the service data flow to which the downlink data packet belongs is the first service data flow may include: reading, by the UPF, the service data flow identifier carried in the header of the downlink data packet, to determine the service data flow to which the downlink data packet belongs. For example, the UPF reads the service data flow identifier carried in the header of the downlink data packet; and if the UPF determines that the service data flow identifier carried in the header of the downlink data packet is the same as the identifier of the first service data flow, the UPF determines that the service data flow to which the downlink data packet belongs is the first service data flow. Alternatively, the process of determining, by the UPF, that the service data flow to which the downlink data packet belongs is the first service data flow may include: matching, by the UPF, the received downlink data packet according to the description information of the first service data flow that is transmitted by the SMF, to determine the service data flow to which the data packet belongs. For example, the UPF reads the service data flow identifier and/or the device identity carried in the header of the downlink data packet; and if the UPF determines that the service data flow identifier carried in the header of the downlink data packet is the same as the identifier of the first service data flow in the description information of the first service data flow and/or the device identity carried in the header of the downlink data packet is the same as an identity of a tethered device in the description information of the first service data flow, the UPF determines that the service data flow to which the downlink data packet belongs is the first service data flow.

The foregoing processing of determining, by the UPF, that the service data flow to which the downlink data packet belongs is the first service data flow may also be referred to as processing of verifying that the downlink data packet belongs to a valid service data flow.

The process of performing, by the UPF, the corresponding data transmission control based on the control information associated with the first service data flow, and transmitting, by the UPF, the downlink data packet to the terminal by using the access network device may include: performing, by the UPF, QoS control, bit rate control, charging control, and gating control based on the control information associated with the first service data flow; adding, by the UPF, the flow identifier allocated by the network to the downlink data packet, and transmitting, by the UPF, the downlink data packet to the access network device; and transmitting, by the access network device, the downlink data packet to the terminal.

Step 621: For uplink data, the UE determines that a service data flow to which an uplink data packet belongs is the first service data flow, performs corresponding data transmission control based on the control information associated with the first service data flow, and transmits the uplink data packet to the UPF by using an access network device.

Specifically, the process of determining, by the UE, that the service data flow to which the uplink data packet belongs is the first service data flow may include: reading, by the UE, a service data flow identifier carried in a header of the uplink data packet provided by an upper-layer protocol unit. For example, the UE reads the service data flow identifier carried in the header of the uplink data packet provided by the upper-layer protocol unit; and if the UE determines that the service data flow identifier carried in the header of the uplink data packet is the same as the identifier of the first service data flow, the UE determines that the service data flow to which the uplink data packet belongs is the first service data flow. Alternatively, the process of determining, by the UE, that the service data flow to which the uplink data packet belongs is the first service data flow may include: matching, by the UE, the uplink data packet according to the description information of the first service data flow that is transmitted by the SMF, to determine the service data flow to which the data packet belongs. For example, the UE reads the service data flow identifier and/or the identity of the tethered device carried in the header of the uplink data packet; and if the UE determines that the service data flow identifier carried in the header of the uplink data packet is the same as the identifier of the first service data flow in the description information of the first service data flow and/or the description information of the first service data flow includes the identity of the tethered device, the UE determines that the service data flow to which the uplink data packet belongs is the first service data flow.

The foregoing processing of determining, by the UE, that the service data flow to which the uplink data packet belongs is the first service data flow may also be referred to as processing of verifying that the uplink data packet belongs to a valid service data flow.

The process of performing the corresponding data transmission control based on the control information associated with the first service data flow, and transmitting the uplink data packet to the user plane function by using the access network device may include: transmitting, by the UE based on the control information associated with the first service data flow, a specific first service data flow to the access network device by using a corresponding radio resource, and performing, by the UE, bit rate control.

Optionally, the header of the uplink data packet transmitted by the UE to the network may include the identifier of the first service data flow and/or the identity of the tethered device. In this case, step 622 may be further executed.

Step 622 (optional): After receiving the uplink data packet from the access network device, the UPF may determine, based on the service data flow identifier and/or the identity of the tethered device in the header of the uplink data packet, that the service data flow to which the uplink data packet belongs is the first service data flow, perform transmission control on the uplink data packet, and transmit the uplink data packet to the AF. In this step, the UPF may directly transmit the uplink data packet to the AF, or the UPF may transmit the uplink data packet to another device by using the AF. Therefore, an arrow for the uplink data packet in step 622 of FIG. 6 is not terminated at the AF.

For example, the UPF reads the service data flow identifier in the header of the uplink data packet, to determine a service data flow to which the uplink data packet belongs (that is, the UPF determines that the uplink data packet belongs to the first service data flow, in a case that the service data flow identifier carried in the header of the uplink data packet is the same as the identifier of the first service data flow). Alternatively, the UPF matches the received uplink data packet according to the description information of the service data flow that is obtained from the SMF, to determine a service data flow to which the data packet belongs (that is, the UPF determines that the uplink data packet belongs to the first service data flow, in a case that the service data flow identifier carried in the header of the uplink data packet is the same as the identifier of the first service data flow and/or the device identity carried in the header of the uplink data packet is the same as the identity of the tethered device). The UPF performs bit rate control, charging control, and gating control on the uplink data packet, to verify that the uplink data packet belongs to a valid service data flow (that is, the UPF verifies that the uplink data packet belongs to a valid service data flow in a case that the uplink data packet belongs to the first service data flow), and the like.

In the foregoing example, description information of a service data flow (for example, the first service data flow) includes at least one of an identifier of the service data flow or an identity of a tethered device. The application server AF adds the identifier of the service data flow and the identity of the tethered device in a header of a downlink data packet, and transmits the downlink data packet to the UPF. The UPF determines a service data flow to which the downlink data packet belongs, and performs corresponding transmission control. The UE determines a service data flow to which an uplink data packet belongs, and performs corresponding transmission control, where a header of the uplink data packet includes at least one of an identifier of the service data flow or an identity of a tethered device. In this way, at least one of an identifier of a service data flow or an identity of a tethered device is added in description information of the service data flow, and a header of a data packet is required to carry the identifier of the service data flow or the identity of the tethered device, so that the header of the data packet can be matched with the description information of the service data flow, thereby determining a service data flow to which data belongs. In a case that a 3GPP network cannot identify a transmission protocol (unstructured data), or in a case that an application packs a plurality of service flows together for encryption and transmission, or in a case that a plurality of tethered devices access a network by using a same UE, a network (for example, an operator network) can distinguish between and control service data flows by using the foregoing solution.

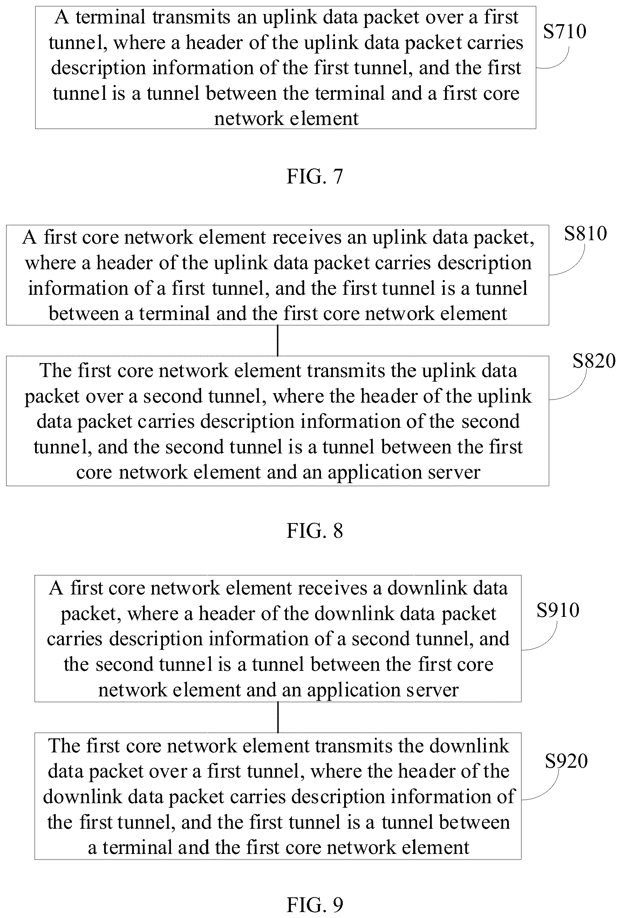

FIG. 7 is a schematic flowchart of a communication method according to an embodiment of this application. The method includes at least S710.

S710: A terminal transmits an uplink data packet over a first tunnel, where a header of the uplink data packet carries description information of the first tunnel, and the first tunnel is a tunnel between the terminal and a first core network element.

FIG. 8 is a schematic flowchart of a communication method according to another embodiment of this application. The method includes at least S810 and S820.

S810: A first core network element receives an uplink data packet, where a header of the uplink data packet carries description information of a first tunnel, and the first tunnel is a tunnel between a terminal and the first core network element.

S820: The first core network element transmits the uplink data packet over a second tunnel, where the header of the uplink data packet carries description information of the second tunnel, and the second tunnel is a tunnel between the first core network element and an application server.

FIG. 9 is a schematic flowchart of a communication method according to another embodiment of this application. The method includes at least S910 and S920.

S910: A first core network element receives a downlink data packet, where a header of the downlink data packet carries description information of a second tunnel, and the second tunnel is a tunnel between the first core network element and an application server.

S920: The first core network element transmits the downlink data packet over a first tunnel, where the header of the downlink data packet carries description information of the first tunnel, and the first tunnel is a tunnel between a terminal and the first core network element.

Herein, the first core network element may include a user plane network element.

In some possible implementations, before the terminal transmits the uplink data packet over the first tunnel, the terminal first establishes the first tunnel, and the application server establishes the second tunnel. Specifically, the first tunnel is established between the terminal and the first core network element of a core network, the second tunnel is established between the application server and the first core network element of the core network, and both the first tunnel and the second tunnel are used to transmit a first service data flow.

For example, the terminal is a UE and the first core network element is a UPF, that is, a tunnel 1 (the first tunnel) is established between the UE and the UPF of the core network, and a tunnel 2 (the second tunnel) is established between the application server and the UPF of the core network. For example, the UE and the application server may respectively establish the tunnel 1 and the tunnel 2 with the UPF based on a MASQUE (Multiplexed Application Substrate over QUIC Encryption) protocol. The tunnel 1 and the tunnel 2 are used to transmit a specific first service data flow, that is, a service data flow indicated by description information of the first service data flow.

In implementations, an identifier of the first service data flow and an identity of a first device that are included in the description information of the first service data flow are the same as the identifier of the first service data flow and the identity of the first device in the foregoing embodiments. Therefore, details are not described again.

In addition, the description information of the first service data flow needs to be synchronized between the terminal and an AF. Herein, a relationship between the AF and the application server is as follows: the application server may be a DN, the AF is a control plane network element, and the AF and the application server may be a same device. However, when control plane interaction is performed, the device is referred to as an AF; or when user plane data is transmitted, the device is referred to as an application server.

The process of synchronizing, between the terminal and the AF, the description information of the first service data flow may include: synchronizing, between the terminal and the AF, the identifier of the first service data flow, and/or synchronizing, between the terminal and the AF, the identity of the first device. A specific manner of synchronizing, between the terminal and the AF, the identifier of the first service data flow, and a specific manner of synchronizing, between the terminal and the AF, the identity of the first device are the same as the processing manners in the foregoing embodiments. Therefore, details are not described again.

After the establishing, by the terminal, the first tunnel with the first core network element of the core network, and before the transmitting, by the terminal, the uplink data packet over the first tunnel, the method may further include: transmitting, by the terminal, first information to a second core network element. The first information is used to indicate an association relationship between the description information of the first service data flow and the description information of the first tunnel. Correspondingly, processing of the second core network element may include: receiving, by the second core network element, the first information transmitted by the terminal.

The second core network element may include at least one of the following: a mobility management network element, a session management network element, or a policy control network element. The mobility management network element may include an AMF, the session management network element may include an SMF, and the policy control network element may include a PCF.

Optionally, the first information may include the description information of the first service data flow and the description information of the first tunnel. In this case, the terminal may indicate the association relationship between the description information of the first service data flow and the description information of the first tunnel, by using the first information that includes the description information of the first service data flow and the description information of the first tunnel. That is, after receiving the first information that includes the description information of the first service data flow and the description information of the first tunnel, the second core network element may obtain the description information of the first service data flow and the description information of the first tunnel, and determine the association relationship between the description information of the first service data flow and the description information of the first tunnel.

Optionally, the first information may include the description information of the first service data flow, the description information of the first tunnel, and association indication information between the description information of the first service data flow and the description information of the first tunnel. The association indication information may be an association identifier. For example, if the association identifier is 1, it indicates there is the association relationship between the two pieces of description information included in the first information. It should be understood that, the description herein is merely an example, and content that may be included in the association indication information is not enumerated or limited.

In this case, after receiving the first information, the second core network element may directly obtain the description information of the first service data flow, the description information of the first tunnel, and the association relationship between the description information of the first service data flow and the description information of the first tunnel.

After the establishing, by the application server, the second tunnel with the first core network element of the core network, and before the transmitting, by the application server, the downlink data packet over the second tunnel, the method may further include: transmitting, by the application server, sixth information to a second core network element, where the sixth information is used to indicate an association relationship between the description information of the first service data flow and the description information of the second tunnel. Correspondingly, processing of the second core network element may include: receiving, by the second core network element, the sixth information transmitted by the application server.

A manner in which the sixth information indicates the association relationship between the description information of the first service data flow and the description information of the second tunnel is similar to the manner in which the first information indicates the association relationship between the description information of the first service data flow and the description information of the first tunnel. Therefore, details are not described herein again.

The description information of the first tunnel includes at least one of the following: an internet protocol IP 5-tuple corresponding to the first tunnel or an IP 3-tuple corresponding to the first tunnel. The description information of the second tunnel includes at least one of the following: an internet protocol IP 5-tuple corresponding to the second tunnel or an IP 3-tuple corresponding to the second tunnel.

Exemplarily, the description information of the first tunnel may also be referred to as a filter (filter) of the first tunnel or a packet filter set (packet filter set) of the first tunnel, and the description information of the second tunnel may also be referred to as a filter (filter) of the second tunnel or a packet filter set (packet filter set) of the second tunnel.

In some possible implementations, before the transmitting, by the terminal, the uplink data packet over the first tunnel, the method further includes: receiving, by the terminal, second information transmitted by a second core network element. The second information includes control information of the first tunnel and an association relationship between the control information of the first tunnel and the description information of the first tunnel. Correspondingly, processing of the second core network element may include: transmitting, by the second core network element, the second information to the terminal. A specific manner in which the second core network element determines the control information of the first tunnel is not limited in embodiments of this application.

Before the receiving, by the first core network element, the uplink data packet, the method further includes: receiving, by the first core network element, fifth information transmitted by a second core network element. The fifth information includes control information of the first tunnel and an association relationship between the control information of the first tunnel and the description information of the first tunnel.

Alternatively, before the receiving, by the first core network element, the downlink data packet, the method further includes: receiving, by the first core network element, fifth information transmitted by a second core network element. The fifth information includes control information of the first tunnel and an association relationship between the control information of the first tunnel and the description information of the first tunnel.

Correspondingly, processing of the second core network element may include: transmitting, by the second core network element, the fifth information to the terminal. A specific manner in which the second core network element determines the control information of the first tunnel is not limited in embodiments of this application.

The control information of the first tunnel includes at least one of the following: a radio resource associated with the first tunnel, a bit rate associated with the first tunnel, a quality of service QoS parameter associated with the first tunnel, a gating parameter associated with the first tunnel, a charging parameter associated with the first tunnel, or a data flow identifier associated with the first tunnel.

The radio resource may include a time domain resource and/or a frequency domain resource. The gating parameter may be a gating (gating) control parameter. The data flow identifier associated with the first tunnel includes a QoS flow identifier associated with the first tunnel.

Optionally, the control information of the first tunnel that is transmitted by the second core network element to the terminal may be the same as the control information of the first tunnel that is transmitted by the second core network element to the first core network element. For example, both the control information of the first tunnel that is transmitted by the second core network element to the terminal and the control information of the first tunnel that is transmitted by the second core network element to the first core network element may include some or all of the foregoing parameters.

Optionally, the control information of the first tunnel that is transmitted by the second core network element to the terminal may be at least partially different from the control information of the first tunnel that is transmitted by the second core network element to the first core network element.

For example, the control information of the first tunnel that is transmitted by the second core network element to the terminal may include at least one of the following: the radio resource associated with the first tunnel, the bit rate associated with the first tunnel, the data flow identifier associated with the first tunnel, and the like. It should be understood that, the foregoing description is merely an example, and parameters that may be included in the control information of the first tunnel that is transmitted by the second core network element to the terminal are not limited or enumerated herein. The control information of the first tunnel that is transmitted by the second core network element to the first core network element may include at least one of the following: a bit rate associated with the first tunnel, a quality of service QoS parameter associated with the first tunnel, a gating parameter associated with the first tunnel, a charging parameter associated with the first tunnel, a data flow identifier associated with the first tunnel, or the like. It should be understood that, the foregoing description is merely an example, and parameters that may be included in the control information of the first tunnel that is transmitted by the second core network element to the first core network element are not limited or enumerated herein.

The terminal may obtain or save the following content: the description information of the first tunnel, the control information of the first tunnel, the description information of the first service data flow, the association relationship between the control information of the first tunnel and the description information of the first tunnel, and the association relationship between the description information of the first tunnel and the description information of the first service data flow.

In some possible implementations, before the receiving, by the first core network element, the uplink data packet, the method further includes: receiving, by the first core network element, third information transmitted by a second core network element, where the third information is used to indicate an association relationship between the description information of the first tunnel and the description information of the second tunnel. Before the receiving, by the first core network element, the downlink data packet, the method further includes: receiving, by the first core network element, third information transmitted by a second core network element, where the third information is used to indicate an association relationship between the description information of the first tunnel and the description information of the second tunnel.

Correspondingly, processing of the second core network element may further include: transmitting, by the second core network element, the third information to the first core network element.

Optionally, the third information may include the description information of the first tunnel and the description information of the second tunnel. In this case, the second core network element may indicate the association relationship between the description information of the first tunnel and the description information of the second tunnel, by using the third information that includes the description information of the first tunnel and the description information of the second tunnel. That is, after receiving the third information that includes the description information of the first tunnel and the description information of the second tunnel, the first core network element may obtain the description information of the first tunnel and the description information of the second tunnel, and determine the association relationship between the description information of the first tunnel and the description information of the second tunnel.

Optionally, the third information may include the description information of the first tunnel, the description information of the second tunnel, and association indication information between the description information of the first tunnel and the description information of the second tunnel. In this case, after receiving the third information, the first core network element may directly obtain the description information of the first tunnel, the description information of the second tunnel, and the association relationship between the description information of the first tunnel and the description information of the second tunnel.

Through the foregoing processing, the first core network element may obtain or save the following content: the description information of the first tunnel, the description information of the second tunnel, the control information of the first tunnel, the association relationship between the description information of the first tunnel and the description information of the second tunnel, and the association relationship between the control information of the first tunnel and the description information of the first tunnel.

In some possible implementations, before the receiving, by the first core network element, the uplink data packet, the method further includes: receiving, by the first core network element, fourth information transmitted by a second core network element, where the fourth information is used to indicate an association relationship between the description information of the second tunnel and description information of a first service data flow, and an association relationship between the description information of the first tunnel and the description information of the first service data flow. Alternatively, before the receiving, by the first core network element, the downlink data packet, the method further includes: receiving, by the first core network element, fourth information transmitted by a second core network element, where the fourth information is used to indicate an association relationship between the description information of the second tunnel and description information of a first service data flow, and an association relationship between the description information of the first tunnel and the description information of the first service data flow.

Correspondingly, processing of the second core network element may further include: transmitting, by the second core network element, the fourth information to the first core network element.

Optionally, the fourth information may include the description information of the first tunnel, the description information of the second tunnel, and the description information of the first service data flow, and the fourth information may further include association indication information between the description information of the first tunnel and the description information of the first service data flow, and association indication information between the description information of the second tunnel and the description information of the first service data flow. In this case, after receiving the fourth information, the first core network element may obtain the description information of the first tunnel, the description information of the second tunnel, the description information of the first service data flow, the association relationship between the description information of the second tunnel and the description information of the first service data flow, and the association relationship between the description information of the first tunnel and the description information of the first service data flow.

Optionally, the fourth information may include two pairs, that is, {the description information of the first tunnel, the description information of the first service data flow}, and {the description information of the second tunnel, the description information of the first service data flow}, where information in each of the two pairs is associated with each other. In this case, after receiving the third information, the first core network element may directly obtain the description information of the first tunnel, the description information of the second tunnel, the description information of the first service data flow, the association relationship between the description information of the second tunnel and the description information of the first service data flow, and the association relationship between the description information of the first tunnel and the description information of the first service data flow.

Through the foregoing processing, the first core network element may obtain or save the following content: the description information of the first tunnel, the description information of the second tunnel, the description information of the first service data flow, the control information of the first tunnel, the association relationship between the description information of the second tunnel and the description information of the first service data flow, and the association relationship between the description information of the first tunnel and the description information of the first service data flow.

In some possible implementations, before the transmitting, by the terminal, the uplink data packet over the first tunnel, the method further includes: determining, by the terminal based on description information of a first service data flow, that the uplink data packet belongs to the first service data flow; and determining, by the terminal based on an association relationship between the description information of the first service data flow and the description information of the first tunnel, that the uplink data packet corresponds to the first tunnel. The description information of the first service data flow includes at least one of the following: an identifier of the first service data flow or an identity of a first device.

The process of determining, by the terminal based on the description information of the first service data flow, that the uplink data packet belongs to the first service data flow includes at least one of the following: receiving, by the terminal, the uplink data packet transmitted by the first device; and determining that the uplink data packet belongs to the first service data flow in a case that the description information of the first service data flow includes the identity of the first device, or determining, by the terminal, that the uplink data packet belongs to the first service data flow in a case that a flow identifier carried in the uplink data packet matches the identifier of the first service data flow in the description information of the first service data flow.

In implementations, the description information of the first service data flow, the identifier of the first service data flow, the first device, the identity of the first device, and a specific manner of determining, by the terminal based on the description information of the first service data flow, that the uplink data packet belongs to the first service data flow are the same as those described in the foregoing embodiments. Therefore, details are not described again.

The process of transmitting, by the terminal, the uplink data packet over the first tunnel includes: transmitting, by the terminal, the uplink data packet over the first tunnel based on control information of the first tunnel.

Specifically, the process of transmitting, by the terminal, the uplink data packet over the first tunnel based on the control information of the first tunnel may include: determining, by the terminal, the control information of the first tunnel based on the description information of the first tunnel and the association relationship between the description information of the first tunnel and the control information of the first tunnel; and transmitting, by the terminal, the uplink data packet over the first tunnel based on the control information of the first tunnel. It should be noted that, the process of transmitting the uplink data packet over the first tunnel may include: adding the description information of the first tunnel in a header of the uplink data packet, and transmitting the uplink data packet over the first tunnel.

For example, the process of transmitting, by the terminal, the uplink data packet over the first tunnel based on the control information of the first tunnel may include: controlling, by the terminal based on a radio resource and a bit rate associated with the first tunnel, transmission of the uplink data packet to the first core network element over the first tunnel by using an access network device. It should be understood that, the description herein is merely an example. In actual processing, the control information of the first tunnel that is received by the terminal may include a parameter other than the foregoing parameters, and is not limited or enumerated herein.

In some possible implementations, the process of receiving, by the first core network element, the uplink data packet may include: receiving, by the first core network element over the first tunnel, the uplink data packet transmitted by the terminal.

Before the transmitting, by the first core network element, the uplink data packet over the second tunnel, the method further includes: replacing, by the first core network element, the description information of the first tunnel that is carried in the header of the uplink data packet with the description information of the second tunnel. As already described in the foregoing implementations, when transmitting the uplink data packet over the first tunnel, the terminal carries the description information of the first tunnel in the header of the uplink data packet. Correspondingly, after receiving the uplink data packet, the first core network element side may extract the description information of the first tunnel that is carried in the header of the uplink data packet, determine the description information of the second tunnel, and replace the description information of the first tunnel that is carried in the header of the uplink data packet with the description information of the second tunnel.

In an embodiment, the first core network element saves the association relationship between the description information of the first tunnel and the description information of the second tunnel. Correspondingly, the second tunnel is determined based on the association relationship between the description information of the first tunnel and the description information of the second tunnel. Specifically, a process of determining, by the first core network element, the second tunnel may include: extracting, by the first core network element, the description information of the first tunnel that is carried in the header of the uplink data packet, and determining, by the first core network element, the second tunnel based on the association relationship between the description information of the first tunnel and the description information of the second tunnel.

In an embodiment, the first core network element saves the association relationship between the description information of the second tunnel and the description information of the first service data flow, and the association relationship between the description information of the first tunnel and the description information of the first service data flow. Correspondingly, the second tunnel is determined based on a first service data flow to which the uplink data packet belongs and an association relationship between the description information of the second tunnel and description information of the first service data flow. The first service data flow is determined based on an association relationship between the description information of the first tunnel and the description information of the first service data flow. Specifically, a process of determining, by the first core network element, the second tunnel may include: extracting, by the first core network element, the description information of the first tunnel that is carried in the header of the uplink data packet; determining, by the first core network element based on the association relationship between the description information of the first tunnel and the description information of the first service data flow, that a service data flow to which the uplink data packet belongs is the first service data flow; and determining, by the first core network element, the second tunnel based on the first service data flow to which the uplink data packet belongs and the association relationship between the description information of the second tunnel and the description information of the first service data flow.

The process of transmitting, by the first core network element, the uplink data packet over the second tunnel includes: transmitting, by the first core network element, the uplink data packet over the second tunnel based on control information of the first tunnel. For example, the process of transmitting, by the first core network element, the uplink data packet over the second tunnel based on the control information of the first tunnel may include: controlling, by the first core network element based on a bit rate, a charging parameter, and a gating parameter associated with the first tunnel, transmission of the uplink data packet to an application server over the second tunnel. It should be understood that, the description herein is merely an example. In actual processing, the control information of the first tunnel that is received by the first core network element may include a parameter other than the foregoing parameters, and is not limited or enumerated herein.

In some possible implementations, the process of receiving, by the first core network element, the downlink data packet may include: receiving, by the first core network element, the downlink data packet over the second tunnel.

Specifically, the downlink data packet received by the first core network element is transmitted by using the application server. A process of transmitting the downlink data packet by the application server may include: before transmitting, by the application server, the downlink data packet, determining, by the application server based on the description information of the first service data flow, a service data flow identifier carried in a header of the downlink data packet, and/or an identity of a device to which the downlink data packet is to be transmitted, whether the downlink data packet belongs to the first service data flow; determining, by the application server, the second tunnel based on the association relationship between the description information of the first service data flow and the description information of the second tunnel, in a case that the application server determines that the downlink data packet belongs to the first service data flow; and adding, by the application server, the description information of the second tunnel in the downlink data packet, and transmitting, by the application server, the downlink data packet to the first core network element over the second tunnel.

Before the transmitting, by the first core network element, the downlink data packet over the first tunnel, the method further includes: replacing, by the first core network element, the description information of the second tunnel that is carried in the header of the downlink data packet with the description information of the first tunnel. That is, after receiving the downlink data packet, the first core network element extracts the description information of the second tunnel that is carried in the header of the downlink data packet, determines the description information of the first tunnel, and replaces the description information of the second tunnel that is carried in the header of the downlink data packet with the description information of the first tunnel.

In an embodiment, the first core network element saves the association relationship between the description information of the first tunnel and the description information of the second tunnel. Correspondingly, the first tunnel is determined based on the association relationship between the description information of the first tunnel and the description information of the second tunnel. Specifically, a process of determining, by the first core network element, the first tunnel may include: determining, by the first core network element, the first tunnel based on the association relationship between the description information of the first tunnel and the description information of the second tunnel after extracting the description information of the second tunnel that is carried in the header of the downlink data packet.

In an embodiment, the first core network element saves the association relationship between the description information of the second tunnel and the description information of the first service data flow, and the association relationship between the description information of the first tunnel and the description information of the first service data flow. Correspondingly, the first tunnel is determined based on a first service data flow to which the downlink data packet belongs and an association relationship between the description information of the first tunnel and description information of the first service data flow. The first service data flow is determined based on an association relationship between the description information of the second tunnel and the description information of the first service data flow. Specifically, a process of determining, by the first core network element, the first tunnel may include: extracting, by the first core network element, the description information of the second tunnel that is carried in the header of the downlink data packet; determining, by the first core network element, based on the association relationship between the description information of the second tunnel and the description information of the first service data flow, that a service data flow to which the downlink data packet belongs is the first service data flow; and determining, by the first core network element, the first tunnel based on the first service data flow to which the downlink data packet belongs and the association relationship between the description information of the first tunnel and the description information of the first service data flow.

The process of transmitting, by the first core network element, the downlink data packet over the first tunnel includes: transmitting, by the first core network element, the downlink data packet over the first tunnel based on control information of the first tunnel. For example, the process of transmitting, by the first core network element, the downlink data packet over the first tunnel based on the control information of the first tunnel may include: adding, by the first core network element, a data flow identifier associated with the first tunnel to the downlink data packet; and controlling, by the first core network element based on a QoS parameter, a bit rate, a charging parameter, and a gating parameter associated with the first tunnel, transmission of the downlink data packet to the terminal over the first tunnel. It should be understood that, the description herein is merely an example. In actual processing, the control information of the first tunnel that is received by the first core network element may include a parameter other than the foregoing parameters, and is not limited or enumerated herein.

It should be understood that, the foregoing describes a case in which the terminal and the first core network element transmit, over the first tunnel and the second tunnel, an uplink data packet and/or a downlink data packet that belongs to the first service data flow. In actual processing, if both the terminal and the first core network element obtain description information and control information of each tunnel in a pair of tunnels in each of a plurality of service data flows, the terminal and the first core network element may further perform corresponding transmission control on an uplink data packet and/or a downlink data packet that belongs to each service data flow. In this case, transmission control on an uplink data packet and/or a downlink data packet that belongs to each service data flow is the same as transmission control on an uplink data packet and/or a downlink data packet belonging to the first service data flow and transmitted over a first tunnel and a second tunnel. Therefore, for brevity, transmission control on an uplink data packet and/or a downlink data packet that belongs to each service data flow is not described in this application.

By using the foregoing solution, a specific service data flow is transmitted over a specific tunnel. In this way, a 3GPP network can know, only by identifying the tunnel, a service data flow to which data transmitted over the tunnel belongs. In a case that the 3GPP network cannot identify a transmission protocol (unstructured data), or in a case that an application packs a plurality of service flows together for encryption and transmission, or in a case that a plurality of tethered devices access a network by using a same UE, service data flows can be distinguished by controlling each tunnel, thereby ensuring accuracy of data packet transmission control.

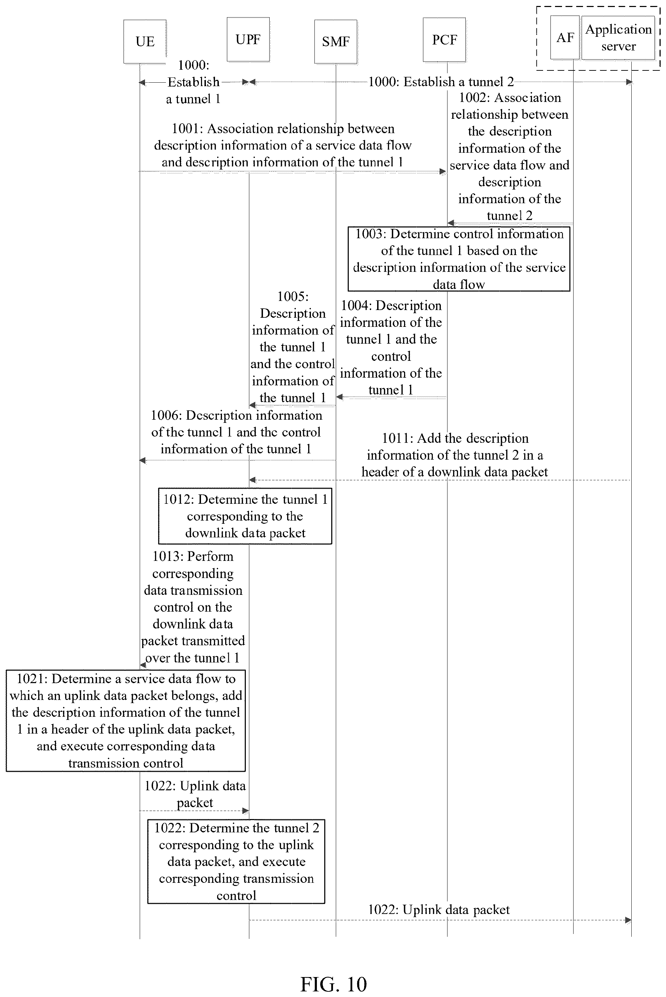

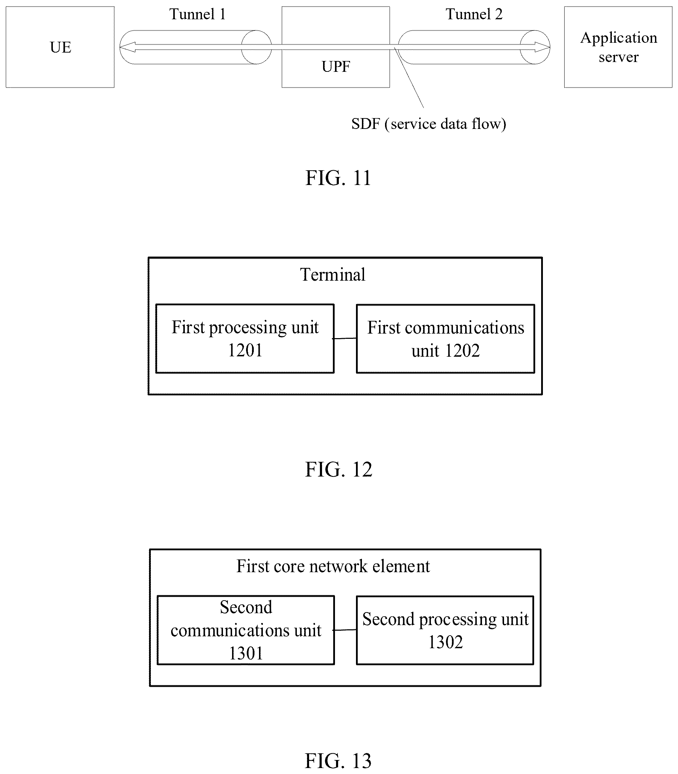

With reference to FIG. 10 and FIG. 11, the foregoing communication method is described by using an example in which the terminal is a UE, the first core network element is a UPF, and the second core network element includes an SMF and a PCF.

Step 1000: The UE establishes a tunnel 1 (that is, the first tunnel) with the UPF of a core network, and an application server (Server) establishes a tunnel 2 (that is, the second tunnel) with the UPF of the core network.

With reference to FIG. 11, in this example, the UE establishes the tunnel 1 with the UPF of the core network, and the application server establishes the tunnel 2 with the UPF of the core network. For example, the tunnel 1 and the tunnel 2 are established based on a MASQUE protocol, and are used to transmit a specific service data flow (SDF, Service data flow), that is, a service data flow indicated by description information of the specific service data flow. Herein, the specific service data flow includes the first service data flow in the foregoing embodiments. The "service data flow" or "specific service data flow" involved in the following steps has a same meaning as the first service data flow in the foregoing embodiments, and is not explained again.

Step 1001: The UE provides the policy control function PCF located in the core network with an association relationship between description information of a service data flow and description information of the tunnel 1. Herein, the association relationship between the description information of the service data flow and the description information of the tunnel 1 may be carried in a request message (for example, a transmission request message), which is not limited in this step.

Step 1002: An AF provides the policy control function PCF located in the core network with an association relationship between the description information of the service data flow and description information of the tunnel 2. Herein, the association relationship between the description information of the service data flow and the description information of the tunnel 2 may be carried in a request message (for example, a transmission request message), which is not limited in this step.

In step 1001 and step 1002, the AF or the UE may directly transmit the request message to the PCF, or forward the request message to the PCF by using another network element such as an NEF, an AMF, or the SMF. The description information of the tunnel 1 and the description information of the tunnel 2 are the same as a packet filter set defined in a current 3GPP network, for example, may be an IP 5-tuple or an IP 3-tuple used by the tunnel 1 and the tunnel 2.

It should be noted that, when step 1001 and step 1002 are executed or before step 1001 and step 1002 are executed, the AF may interact with the UE by using an application layer, to synchronize an identifier of the service data flow and an identity of a tethered device (that is, the identity of the first device). Details are not described herein again.

In addition, an execution sequence of step 1001 and step 1002 is not limited in embodiments of this application.

Step 1003 to step 1006: The PCF transmits the description information of the tunnel 1 to the UPF and/or the UE by using the SMF. Specifically, the process of transmitting, by the PCF, the description information of the tunnel 1 to the UPF and/or the UE by using the SMF may include: transmitting, by the PCF, the description information of the tunnel 1 and control information of the tunnel 1 to the UPF and/or the UE by using the SMF.

In this example, because a tunnel is associated with a specific service data flow, a network controls data that belongs to the tunnel 1, that is, controls a specific service data flow corresponding to the tunnel.

Specifically, in step 1003, the PCF determines the control information of the tunnel 1 based on the description information of the service data flow. In step 1004, the PCF transmits the description information of the tunnel 1 and the control information of the tunnel 1 to the SMF. Step 1005: The SMF transmits the description information of the tunnel 1 and the control information of the tunnel 1 to the UPF. Step 1006: The SMF transmits the description information of the tunnel 1 and the control information of the tunnel 1 to the UE. The control information may include at least one of a QoS parameter, a gating parameter, a charging parameter, a flow identifier allocated by a network, or the like.

For example, the process of determining, by the PCF, the control information of the tunnel 1 based on the description information of the service data flow may include: setting, by the PCF according to description information of different service data flows, different QoS parameters and the like for different service data flow identifiers or tunnels corresponding to different tethered device identities.

Step 1011: For downlink data, the application server carries the description information of the tunnel 2 in a header of a downlink data packet, and transmits the downlink data packet to the UPF.

Step 1012: The UPF determines the tunnel 1 corresponding to the downlink data packet, based on the description information of the tunnel 2 that is carried in the header of the downlink data packet and a correspondence between the description information of the tunnel 1 and the description information of the tunnel 2.

It should also be noted that, in another possible example, step 1012 may be replaced with the following operations: determining, by the UPF, a service data flow to which the downlink data packet belongs, based on the description information of the tunnel 2 that is carried in the header of the downlink data packet and the correspondence between the description information of the service data flow and the description information of the tunnel 2; and determining, by the UPF, the tunnel 1 corresponding to the downlink data packet based on an association relationship between the service data flow to which the downlink data packet belongs and the description information of the tunnel 1.

The processing in step 1012 may also be referred to as verifying that the downlink data packet belongs to a valid service data flow.

Step 1013: The UPF transmits the received downlink data packet to the UE over the tunnel 1, removes the description information of the tunnel 2 from the header of the downlink data packet, and adds the description information of the tunnel 1 in the header of the downlink data packet. In addition, the UPF performs corresponding data transmission control such as QoS control, bit rate control, charging control, and gating control on the downlink data packet transmitted over the tunnel 1, and transmits the downlink data packet to the terminal by using an access network device.

Before step 1013, that is, before the process of performing, by the UPF, the corresponding data transmission control on the downlink data packet transmitted over the tunnel 1, the method may further include: adding, by the UPF, a flow identifier allocated by a network to the downlink data packet.

Step 1021: For uplink data, the UE determines a service data flow to which an uplink data packet belongs, adds the description information of the tunnel 1 in a header of the uplink data packet, and executes corresponding data transmission control according to the description information of the tunnel 1 that is obtained from the SMF. For example, the UE transmits data of the tunnel 1 to an access network device (which transmits the uplink data packet to the UPF) by using a corresponding radio resource. For another example, the UE executes bit rate control and the like.

After the process of determining, by the UE, the service data flow to which the uplink data packet belongs, the method may further include: verifying, by the UE, that the uplink data packet belongs to a valid service data flow.

Step 1022: After receiving the uplink data packet, the UPF determines the tunnel 2 corresponding to the uplink data packet based on the description information of the tunnel 1 in the header of the uplink data packet and the association relationship between the description information of the tunnel 1 and the description information of the tunnel 2, removes the description information of the tunnel 1 from the header of the uplink data packet, and adds the description information of the tunnel 2 in the header of the uplink data packet. In addition, the UPF executes corresponding transmission control, and transmits the received uplink data packet to the application server over the tunnel 2.

The UPF executes the corresponding transmission control, including bit rate control, charging control, and gating control, to verify that the data packet belongs to a valid service data flow.

It should be further noted that, in another possible example, step 1022 may be replaced with the following operations: after receiving the uplink data packet, the UPF determines a service data flow to which the uplink data packet belongs based on the description information of the tunnel 1 in the header of the uplink data packet, determines the tunnel 2 corresponding to the uplink data packet based on the association relationship between the description information of the service data flow and the description information of the tunnel 2, removes the description information of the tunnel 1 from the header of the uplink data packet, and adds the description information of the tunnel 2 in the header of the uplink data packet. In addition, the UPF executes corresponding transmission control, and transmits the received uplink data packet to the application server over the tunnel 2.

In the foregoing example, the UE or the application server (AF) establishes a tunnel with the UPF, and the UE or the AF provides the PCF with the correspondence between the description information of the service data flow and the description information of the tunnel 1 and the correspondence between the description information of the service data flow and the description information of the tunnel 2. The application server carries the description information of the tunnel 2 in a header of a downlink data packet, and transmits the downlink data packet to the UPF. The UPF determines a service data flow to which data belongs, removes a header of the tunnel 2, adds a header of the tunnel 1, and performs corresponding transmission control on the downlink data packet transmitted over the tunnel 1. The UE determines a service data flow to which an uplink data packet belongs, performs corresponding transmission control, and adds the description information of the tunnel 1 in a header of the uplink data packet. The UPF determines the service data flow to which the uplink data packet belongs, removes the description information of the tunnel 1 that is carried in the header of the uplink data packet, and adds the description information of the tunnel 2 in the header of the uplink data packet. In this way, a specific service data flow is transmitted over a specific tunnel, and the service data flow is controlled by controlling the tunnel. A 3GPP network can know, only by identifying the tunnel, a service data flow to which data transmitted over the tunnel belongs. In a case that the 3GPP network cannot identify a transmission protocol (unstructured data), or in a case that an application packs a plurality of service flows together for encryption and transmission, or in a case that a plurality of tethered devices access a network by using a same UE, service data flows can be distinguished by controlling each tunnel.

FIG. 12 is a schematic structural diagram of a terminal according to an embodiment of this application. The terminal includes:
a first processing unit 1201, configured to determine, based on description information of a first service data flow, that an uplink data packet belongs to the first service data flow, where the description information of the first service data flow includes at least one of the following: an identifier of the first service data flow or an identity of a first device; and
a first communications unit 1202, configured to transmit the uplink data packet to a first core network element.

The first processing unit is configured to execute at least one of the following: receiving, by using the first communications unit, the uplink data packet transmitted by the first device, and determining that the uplink data packet belongs to the first service data flow in a case that the description information of the first service data flow includes the identity of the first device; or determining that the uplink data packet belongs to the first service data flow in a case that a flow identifier carried in the uplink data packet matches the identifier of the first service data flow in the description information of the first service data flow.

The first processing unit is configured to add at least one of the following in a header of the uplink data packet: the identifier of the first service data flow or the identity of the first device.

The first communications unit is configured to receive a filter of the first service data flow that is transmitted by a second core network element.

The first communications unit is configured to transmit a transmission request message of the first service data flow to a second core network element, where the transmission request message carries a filter of the first service data flow.

The filter of the first service data flow includes the description information of the first service data flow.

The first communications unit is configured to transmit the uplink data packet to the first core network element based on control information associated with the first service data flow.

The first communications unit is configured to receive control information associated with a first service data flow that is transmitted by a second core network element.

The control information associated with the first service data flow includes at least one of the following: a radio resource associated with the first service data flow, a bit rate associated with the first service data flow, a quality of service QoS parameter associated with the first service data flow, a gating parameter associated with the first service data flow, a charging parameter associated with the first service data flow, or a data flow identifier associated with the first service data flow.

The data flow identifier associated with the first service data flow includes at least one of the following: the identifier of the first service data flow or a QoS flow identifier associated with the first service data flow.

The second core network element includes at least one of the following: a mobility management network element, a session management network element, or a policy control network element.

The first core network element includes a user plane network element.

FIG. 13 is a schematic structural diagram of a first core network element according to an embodiment of this application. The first core network element includes:
a second communications unit 1301, configured to: receive a data packet; and transmit the data packet; and
a second processing unit 1302, configured to determine, based on description information of a first service data flow, that the data packet belongs to the first service data flow, where the description information of the first service data flow includes at least one of the following: an identifier of the first service data flow or an identity of a first device.

The second processing unit is configured to execute at least one of the following: determining that the data packet belongs to the first service data flow in a case that a service data flow identifier carried in a header of the data packet is the same as the identifier of the first service data flow in the description information of the first service data flow; or determining that the data packet belongs to the first service data flow in a case that a device identity carried in a header of the data packet is the same as the identity of the first device in the description information of the first service data flow.

The second communications unit is configured to receive a filter of the first service data flow that is transmitted by a second core network element, where the filter of the first service data flow includes the description information of the first service data flow.

The data packet is an uplink data packet.

The second communications unit is configured to: receive the uplink data packet transmitted by a terminal; and transmit the uplink data packet to an application server based on control information associated with the first service data flow.

The data packet is a downlink data packet.

The second communications unit is configured to: receive the downlink data packet transmitted by an application server; and transmit the downlink data packet to a terminal based on control information associated with the first service data flow.

The second communications unit is configured to receive control information associated with the first service data flow that is transmitted by a second core network element.

The control information associated with the first service data flow includes at least one of the following: a radio resource associated with the first service data flow, a bit rate associated with the first service data flow, a quality of service QoS parameter associated with the first service data flow, a gating parameter associated with the first service data flow, a charging parameter associated with the first service data flow, or a data flow identifier associated with the first service data flow.

The data flow identifier associated with the first service data flow includes at least one of the following: the identifier of the first service data flow or a QoS flow identifier associated with the first service data flow.

The second core network element includes at least one of the following: a mobility management network element, a session management network element, or a policy control network element.

The first core network element includes a user plane network element.

An embodiment of this application further provides a terminal, including:
a first communications unit, configured to transmit an uplink data packet over a first tunnel, where a header of the uplink data packet carries description information of the first tunnel, and the first tunnel is a tunnel between the terminal and a first core network element.

The terminal further includes a first processing unit, configured to: determine, based on description information of a first service data flow, that the uplink data packet belongs to the first service data flow; and determine, based on an association relationship between the description information of the first service data flow and the description information of the first tunnel, that the uplink data packet corresponds to the first tunnel, where the description information of the first service data flow includes at least one of the following: an identifier of the first service data flow or an identity of a first device.

The first processing unit is configured to execute at least one of the following: receiving, by using the first communications unit, the uplink data packet transmitted by the first device, and determining that the uplink data packet belongs to the first service data flow in a case that the description information of the first service data flow includes the identity of the first device; or determining that the uplink data packet belongs to the first service data flow in a case that a flow identifier carried in the uplink data packet matches the identifier of the first service data flow in the description information of the first service data flow.

The first communications unit is configured to transmit first information to a second core network element, where the first information is used to indicate the association relationship between the description information of the first service data flow and the description information of the first tunnel.

The first communications unit is configured to transmit the uplink data packet over the first tunnel based on control information of the first tunnel.

The first communications unit is configured to receive second information transmitted by a second core network element, where the second information includes control information of the first tunnel and an association relationship between the control information of the first tunnel and the description information of the first tunnel.

The control information of the first tunnel includes at least one of the following: a radio resource associated with the first tunnel, a bit rate associated with the first tunnel, a quality of service QoS parameter associated with the first tunnel, a gating parameter associated with the first tunnel, a charging parameter associated with the first tunnel, or a data flow identifier associated with the first tunnel.

The description information of the first tunnel includes at least one of the following: an internet protocol IP 5-tuple corresponding to the first tunnel or an IP 3-tuple corresponding to the first tunnel.

The second core network element includes at least one of the following: a mobility management network element, a session management network element, or a policy control network element.

The first core network element includes a user plane network element.

An embodiment of this application further provides a first core network element, including:
a second communications unit, configured to: receive an uplink data packet, where a header of the uplink data packet carries description information of a first tunnel, and the first tunnel is a tunnel between a terminal and the first core network element; and transmit the uplink data packet over a second tunnel, where the header of the uplink data packet carries description information of the second tunnel, and the second tunnel is a tunnel between the first core network element and an application server.

The first core network element further includes a second processing unit, configured to replace the description information of the first tunnel that is carried in the header of the uplink data packet with the description information of the second tunnel.

The second tunnel is determined based on an association relationship between the description information of the first tunnel and the description information of the second tunnel.

The second communications unit is configured to receive third information transmitted by a second core network element, where the third information is used to indicate an association relationship between the description information of the first tunnel and the description information of the second tunnel.

The second tunnel is determined based on a first service data flow to which the uplink data packet belongs and an association relationship between the description information of the second tunnel and description information of the first service data flow. The first service data flow is determined based on an association relationship between the description information of the first tunnel and the description information of the first service data flow.

The second communications unit is configured to receive fourth information transmitted by a second core network element, where the fourth information is used to indicate an association relationship between the description information of the second tunnel and description information of a first service data flow and an association relationship between the description information of the first tunnel and the description information of the first service data flow.

The description information of the first service data flow includes at least one of the following: an identifier of the first service data flow or an identity of a first device.

The description information of the first tunnel includes at least one of the following: an internet protocol IP 5-tuple corresponding to the first tunnel or an IP 3-tuple corresponding to the first tunnel.

The description information of the second tunnel includes at least one of the following: an internet protocol IP 5-tuple corresponding to the second tunnel or an IP 3-tuple corresponding to the second tunnel.

The second communications unit is configured to transmit the uplink data packet over the second tunnel based on control information of the first tunnel.

The second communications unit is configured to receive fifth information transmitted by a second core network element, where the fifth information includes control information of the first tunnel and an association relationship between the control information of the first tunnel and the description information of the first tunnel.

The control information of the first tunnel includes at least one of the following: a radio resource associated with the first tunnel, a bit rate associated with the first tunnel, a quality of service QoS parameter associated with the first tunnel, a gating parameter associated with the first tunnel, a charging parameter associated with the first tunnel, or a data flow identifier associated with the first tunnel.

The second core network element includes at least one of the following: a mobility management network element, a session management network element, or a policy control network element.

The first core network element includes a user plane network element.

An embodiment of this application further provides a first core network element, including:
a second communications unit, configured to: receive a downlink data packet, where a header of the downlink data packet carries description information of a second tunnel, and the second tunnel is a tunnel between the first core network element and an application server; and transmit the downlink data packet over a first tunnel, where the header of the downlink data packet carries description information of the first tunnel, and the first tunnel is a tunnel between a terminal and the first core network element.

The first core network element further includes a second processing unit, configured to replace the description information of the second tunnel that is carried in the header of the downlink data packet with the description information of the first tunnel.

The first tunnel is determined based on an association relationship between the description information of the first tunnel and the description information of the second tunnel.

The second communications unit is configured to receive third information transmitted by a second core network element, where the third information is used to indicate an association relationship between the description information of the first tunnel and the description information of the second tunnel.

The first tunnel is determined based on a first service data flow to which the downlink data packet belongs and an association relationship between the description information of the first tunnel and description information of the first service data flow. The first service data flow is determined based on an association relationship between the description information of the second tunnel and the description information of the first service data flow.

The second communications unit is configured to receive fourth information transmitted by a second core network element, where the fourth information is used to indicate an association relationship between the description information of the second tunnel and description information of a first service data flow and an association relationship between the description information of the first tunnel and the description information of the first service data flow.

The description information of the first service data flow includes at least one of the following: an identifier of the first service data flow or an identity of a first device.

The description information of the first tunnel includes at least one of the following: an internet protocol IP 5-tuple corresponding to the first tunnel or an IP 3-tuple corresponding to the first tunnel.

The description information of the second tunnel includes at least one of the following: an internet protocol IP 5-tuple corresponding to the second tunnel or an IP 3-tuple corresponding to the second tunnel.

The second communications unit is configured to transmit the downlink data packet over the first tunnel based on control information of the first tunnel.

The second communications unit is configured to receive fifth information transmitted by a second core network element, where the fifth information includes control information of the first tunnel and an association relationship between the control information of the first tunnel and the description information of the first tunnel.

The control information of the first tunnel includes at least one of the following: a radio resource associated with the first tunnel, a bit rate associated with the first tunnel, a quality of service QoS parameter associated with the first tunnel, a gating parameter associated with the first tunnel, a charging parameter associated with the first tunnel, or a data flow identifier associated with the first tunnel.

The second core network element includes at least one of the following: a mobility management network element, a session management network element, or a policy control network element.

The first core network element includes a user plane network element.

A device according to embodiments of this application can implement a corresponding function of each device in the foregoing method embodiments. For procedures, functions, implementations, and beneficial effects corresponding to modules (submodules, units, or components) in the terminal or the first core network element, one may refer to corresponding descriptions in the foregoing method embodiments. Details are not described herein again. It should be noted that, functions of modules (submodules, units, components, or the like) in the terminal or the first core network element in embodiments of this application may be implemented by different modules (submodules, units, components, or the like), or may be implemented by a same module (submodule, unit, component, or the like).

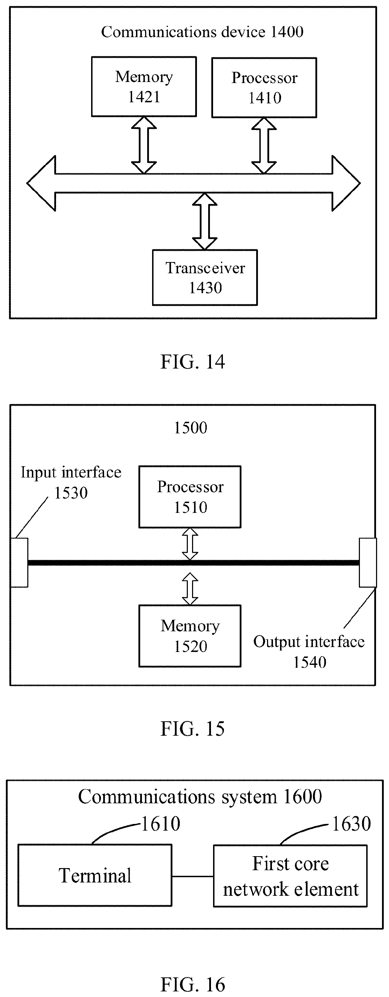

FIG. 14 is a schematic structural diagram of a communications device 1400 according to an embodiment of this application. The communications device 1400 includes a processor 1410, and the processor 1410 may invoke a computer program from a memory and run the computer program to cause the communications device 1400 to implement the method in embodiments of this application. In a possible implementation, the communications device 1400 may further include a memory 1420. The processor 1410 may invoke a computer program from the memory 1420 and run the computer program to cause the communications device 1400 to implement the method in embodiments of this application. The memory 1420 may be a separate component independent of the processor 1410, or may be integrated into the processor 1410. In a possible implementation, the communications device 1400 may further include a transceiver 1430. The processor 1410 may control the transceiver 1430 to communicate with another device, and specifically, may transmit information or data to the another device, or receive information or data transmitted by the another device. The transceiver 1430 may include a transmitter and a receiver. The transceiver 1430 may further include an antenna, and there may be one or more antennas.

In a possible implementation, the communications device 1400 may be the terminal or the first core network element in embodiments of this application, and the communications device 1400 may implement a corresponding procedure implemented by the terminal or the first core network element in the method in embodiments of this application. For brevity, details are not described herein again.

FIG. 15 is a schematic structural diagram of a chip 1500 according to an embodiment of this application. The chip 1500 includes a processor 1510, and the processor 1510 may invoke a computer program from a memory and run the computer program to implement the method in embodiments of this application. In a possible implementation, the chip 1500 may further include a memory 1520. The processor 1510 may invoke a computer program from the memory 1520 and run the computer program, to implement the method executed by a terminal or a first core network element in embodiments of this application. The memory 1520 may be a separate component independent of the processor 1510, or may be integrated into the processor 1510. In a possible implementation, the chip 1500 may further include an input interface 1530. The processor 1510 may control the input interface 1530 to communicate with another device or chip, and specifically, may acquire information or data transmitted by the another device or chip. In a possible implementation, the chip 1500 may further include an output interface 1540. The processor 1510 may control the output interface 1540 to communicate with another device or chip, and specifically, may output information or data to the another device or chip.

In a possible implementation, the chip may be applied to a terminal or a first core network element in embodiments of this application, and the chip may implement a corresponding procedure implemented by a terminal or a first core network element in the method in embodiments of this application. For brevity, details are not described herein again. It should be understood that the chip mentioned in embodiments of this application may alternatively be referred to as a system-level chip, a system chip, a chip system, a system-on-chip, or the like. The foregoing mentioned processor may be a general-purpose processor, a digital signal processor (digital signal processor, DSP), a field programmable gate array (field programmable gate array, FPGA), an application-specific integrated circuit (application specific integrated circuit, ASIC) or another programmable logic device, a transistor logic device, a discrete hardware component, or the like. The general-purpose processor may be a microprocessor, or may be any conventional processor or the like. The memory mentioned above may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). It should be understood that, by way of example but not limitative description, for example, the memory in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct Rambus random access memory (Direct Rambus RAM, DR RAM), or the like. In other words, the memory in embodiments of this application includes but is not limited to these memories and any memory of another proper type.

FIG. 16 is a schematic block diagram of a communications system 1600 according to an embodiment of this application. The communications system 1600 includes a terminal 1610 and a first core network element 1620. The terminal 1610 may be configured to implement a corresponding function implemented by the terminal in the foregoing methods. The first core network element 1620 may be configured to implement a corresponding function implemented by the first core network element in the foregoing methods. For brevity, details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any available medium accessible by a computer or a data storage device such as a server or a data center that integrates one or more available media. The available medium may be a magnetic medium (for example, a floppy disk, a hard disk, or a magnetic tape), an optical medium (for example, a DVD), a semiconductor medium (for example, a solid-state drive (Solid State Disk, SSD)), or the like.

It should be understood that, in embodiments of this application, sequence numbers of the foregoing processes do not mean execution sequences. The execution sequences of the processes should be determined according to functions and internal logic of the processes, and should not be construed as any limitation on the implementation processes of embodiments of this application. It may be clearly understood by a person skilled in the art that, for the purpose of convenient and brief description, for a detailed working process of the foregoing system, apparatus, and unit, reference may be made to corresponding processes in the foregoing method embodiments, and details are not described herein again. The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a terminal based on description information of a first service data flow, that an uplink data packet belongs to the first service data flow, wherein the description information of the first service data flow comprises at least one of following: an identifier of the first service data flow or an identity of a first device; and
transmitting, by the terminal, the uplink data packet to a first core network element.

2. The method according to claim 1, wherein the determining, by the terminal based on the description information of the first service data flow, that the uplink data packet belongs to the first service data flow comprises at least one of following:
receiving, by the terminal, an uplink data packet transmitted by the first device, and determining that the uplink data packet belongs to the first service data flow in a case that the description information of the first service data flow comprises the identity of the first device; or
determining, by the terminal, that the uplink data packet belongs to the first service data flow in a case that a flow identifier carried in the uplink data packet matches the identifier of the first service data flow in the description information of the first service data flow.

3. The method according to claim 1 or 2, wherein before the transmitting, by the terminal, the uplink data packet to the first core network element, the method further comprises:
adding, by the terminal, at least one of following in a header of the uplink data packet: the identifier of the first service data flow or the identity of the first device.

4. The method according to any one of claims 1 to 3, wherein before the determining, by the terminal based on the description information of the first service data flow, that the uplink data packet belongs to the first service data flow, the method further comprises:
receiving, by the terminal, a filter of the first service data flow that is transmitted by a second core network element.

5. The method according to any one of claims 1 to 4, wherein before the determining, by the terminal based on the description information of the first service data flow, that the uplink data packet belongs to the first service data flow, the method further comprises:
transmitting, by the terminal, a transmission request message of the first service data flow to a second core network element, wherein the transmission request message carries a filter of the first service data flow.

6. The method according to claim 4 or 5, wherein the filter of the first service data flow comprises the description information of the first service data flow.

7. The method according to any one of claims 1 to 6, wherein the transmitting, by the terminal, the uplink data packet to the first core network element comprises:
transmitting, by the terminal, the uplink data packet to the first core network element based on control information associated with the first service data flow.

8. The method according to any one of claims 1 to 7, wherein before the determining, by the terminal based on the description information of the first service data flow, that the uplink data packet belongs to the first service data flow, the method further comprises:
receiving, by the terminal, control information associated with the first service data flow that is transmitted by a second core network element.

9. The method according to claim 7 or 8, wherein the control information associated with the first service data flow comprises at least one of following: a radio resource associated with the first service data flow, a bit rate associated with the first service data flow, a quality of service QoS parameter associated with the first service data flow, a gating parameter associated with the first service data flow, a charging parameter associated with the first service data flow, or a data flow identifier associated with the first service data flow.

10. The method according to claim 9, wherein the data flow identifier associated with the first service data flow comprises at least one of following: the identifier of the first service data flow or a QoS flow identifier associated with the first service data flow.

11. The method according to any one of claims 4 to 6 or claim 8, wherein the second core network element comprises at least one of following: a mobility management network element, a session management network element, or a policy control network element.

12. The method according to any one of claims 1 to 11, wherein the first core network element comprises a user plane network element.

13. A communication method, comprising:
receiving, by a first core network element, a data packet;
determining, by the first core network element based on description information of a first service data flow, that the data packet belongs to the first service data flow, wherein the description information of the first service data flow comprises at least one of following: an identifier of the first service data flow or an identity of a first device; and
transmitting, by the first core network element, the data packet.

14. The method according to claim 13, wherein the determining, by the first core network element based on the description information of the first service data flow, that the data packet belongs to the first service data flow comprises at least one of following:
determining, by the first core network element, that the data packet belongs to the first service data flow in a case that a service data flow identifier carried in a header of the data packet is the same as the identifier of the first service data flow in the description information of the first service data flow; or
determining, by the first core network element, that the data packet belongs to the first service data flow in a case that a device identity carried in a header of the data packet is the same as the identity of the first device in the description information of the first service data flow.

15. The method according to claim 13 or 14, wherein before the receiving, by the first core network element, the data packet, the method further comprises:
receiving, by the first core network element, a filter of the first service data flow that is transmitted by a second core network element, wherein the filter of the first service data flow comprises the description information of the first service data flow.

16. The method according to any one of claims 13 to 15, wherein the data packet is an uplink data packet.

17. The method according to claim 16, wherein the receiving, by the first core network element, the data packet comprises: receiving, by the first core network element, the uplink data packet transmitted by a terminal;
wherein the transmitting, by the first core network element, the data packet comprises: transmitting, by the first core network element, the uplink data packet to an application server based on control information associated with the first service data flow.

18. The method according to any one of claims 13 to 15, wherein the data packet is a downlink data packet.

19. The method according to claim 18, wherein the receiving, by the first core network element, the data packet comprises: receiving, by the first core network element, the downlink data packet transmitted by an application server;
wherein the transmitting, by the first core network element, the data packet comprises: transmitting, by the first core network element, the downlink data packet to a terminal based on control information associated with the first service data flow.

20. The method according to any one of claims 13 to 19, wherein before the receiving, by the first core network element, the data packet, the method further comprises:
receiving, by the first core network element, control information associated with the first service data flow that is transmitted by a second core network element.

21. The method according to any one of claims 17, 19, and 20, wherein the control information associated with the first service data flow comprises at least one of following: a radio resource associated with the first service data flow, a bit rate associated with the first service data flow, a quality of service QoS parameter associated with the first service data flow, a gating parameter associated with the first service data flow, a charging parameter associated with the first service data flow, or a data flow identifier associated with the first service data flow.

22. The method according to claim 21, wherein the data flow identifier associated with the first service data flow comprises at least one of following: the identifier of the first service data flow or a QoS flow identifier associated with the first service data flow.

23. The method according to claim 15 or 21, wherein the second core network element comprises at least one of following: a mobility management network element, a session management network element, or a policy control network element.

24. The method according to any one of claims 13 to 23, wherein the first core network element comprises a user plane network element.

25. A communication method, comprising:
transmitting, by a terminal, an uplink data packet over a first tunnel, wherein a header of the uplink data packet carries description information of the first tunnel, and the first tunnel is a tunnel between the terminal and a first core network element.

26. The method according to claim 25, before the transmitting, by the terminal, the uplink data packet over the first tunnel, the method further comprises:
determining, by the terminal based on description information of a first service data flow, that the uplink data packet belongs to the first service data flow; and
determining, by the terminal based on an association relationship between the description information of the first service data flow and the description information of the first tunnel, that the uplink data packet corresponds to the first tunnel, wherein the description information of the first service data flow comprises at least one of following: an identifier of the first service data flow or an identity of a first device.

27. The method according to claim 26, wherein the determining, by the terminal based on the description information of the first service data flow, that the uplink data packet belongs to the first service data flow comprises at least one of following:
receiving, by the terminal, an uplink data packet transmitted by the first device, and determining, by the terminal, that the uplink data packet belongs to the first service data flow in a case that the description information of the first service data flow comprises the identity of the first device; or
determining, by the terminal, that the uplink data packet belongs to the first service data flow in a case that a flow identifier carried in the uplink data packet matches the identifier of the first service data flow in the description information of the first service data flow.

28. The method according to claim 26 or 27, wherein before the transmitting, by the terminal, the uplink data packet over the first tunnel, the method further comprises:
transmitting, by the terminal, first information to a second core network element, wherein the first information is used to indicate the association relationship between the description information of the first service data flow and the description information of the first tunnel.

29. The method according to any one of claims 25 to 28, wherein the transmitting, by the terminal, the uplink data packet over the first tunnel comprises:
transmitting, by the terminal, the uplink data packet over the first tunnel based on control information of the first tunnel.

30. The method according to any one of claims 25 to 29, wherein before the transmitting, by the terminal, the uplink data packet over the first tunnel, the method further comprises:
receiving, by the terminal, second information transmitted by a second core network element, wherein the second information comprises control information of the first tunnel and an association relationship between the control information of the first tunnel and the description information of the first tunnel.

31. The method according to claim 29 or 30, wherein the control information of the first tunnel comprises at least one of following: a radio resource associated with the first tunnel, a bit rate associated with the first tunnel, a quality of service QoS parameter associated with the first tunnel, a gating parameter associated with the first tunnel, a charging parameter associated with the first tunnel, or a data flow identifier associated with the first tunnel.

32. The method according to any one of claims 25 to 31, wherein the description information of the first tunnel comprises at least one of following: an internet protocol IP 5-tuple corresponding to the first tunnel or an IP 3-tuple corresponding to the first tunnel.

33. The method according to claim 28 or 30, wherein the second core network element comprises at least one of following: a mobility management network element, a session management network element, or a policy control network element.

34. The method according to any one of claims 25 to 33, wherein the first core network element comprises a user plane network element.

35. A communication method, comprising:
receiving, by a first core network element, an uplink data packet, wherein a header of the uplink data packet carries description information of a first tunnel, and the first tunnel is a tunnel between a terminal and the first core network element; and
transmitting, by the first core network element, the uplink data packet over a second tunnel, wherein the header of the uplink data packet carries description information of the second tunnel, and the second tunnel is a tunnel between the first core network element and an application server.

36. The method according to claim 35, wherein before the transmitting, by the first core network element, the uplink data packet over the second tunnel, the method further comprises:
replacing, by the first core network element, the description information of the first tunnel that is carried in the header of the uplink data packet with the description information of the second tunnel.

37. The method according to claim 35 or 36, wherein the second tunnel is determined based on an association relationship between the description information of the first tunnel and the description information of the second tunnel.

38. The method according to any one of claims 35 to 37, wherein before the receiving, by the first core network element, the uplink data packet, the method further comprises:
receiving, by the first core network element, third information transmitted by a second core network element, wherein the third information is used to indicate an association relationship between the description information of the first tunnel and the description information of the second tunnel.

39. The method according to claim 37 or 38, wherein the second tunnel is determined based on a first service data flow to which the uplink data packet belongs and an association relationship between the description information of the second tunnel and description information of the first service data flow, and the first service data flow is determined based on an association relationship between the description information of the first tunnel and the description information of the first service data flow.

40. The method according to any one of claims 35, 36, and 39, wherein before the receiving, by the first core network element, the uplink data packet, the method further comprises:
receiving, by the first core network element, fourth information transmitted by a second core network element, wherein the fourth information is used to indicate an association relationship between the description information of the second tunnel and description information of a first service data flow and an association relationship between the description information of the first tunnel and the description information of the first service data flow.

41. The method according to claim 39 or 40, wherein the description information of the first service data flow comprises at least one of following: an identifier of the first service data flow or an identity of a first device.

42. The method according to any one of claims 35 to 41, wherein the description information of the first tunnel comprises at least one of following: an internet protocol IP 5-tuple corresponding to the first tunnel or an IP 3-tuple corresponding to the first tunnel; and
the description information of the second tunnel comprises at least one of following: an internet protocol IP 5-tuple corresponding to the second tunnel or an IP 3-tuple corresponding to the second tunnel.

43. The method according to any one of claims 35 to 42, wherein the transmitting, by the first core network element, the uplink data packet over the second tunnel comprises:
transmitting, by the first core network element, the uplink data packet over the second tunnel based on control information of the first tunnel.

44. The method according to any one of claims 35 to 43, wherein before the receiving, by the first core network element, the uplink data packet, the method further comprises:
receiving, by the first core network element, fifth information transmitted by a second core network element, wherein the fifth information comprises control information of the first tunnel and an association relationship between the control information of the first tunnel and the description information of the first tunnel.

45. The method according to claim 43 or 44, wherein the control information of the first tunnel comprises at least one of following: a radio resource associated with the first tunnel, a bit rate associated with the first tunnel, a quality of service QoS parameter associated with the first tunnel, a gating parameter associated with the first tunnel, a charging parameter associated with the first tunnel, or a data flow identifier associated with the first tunnel.

46. The method according to any one of claims 38, 40, and 44, wherein the second core network element comprises at least one of following: a mobility management network element, a session management network element, or a policy control network element.

47. The method according to any one of claims 35 to 46, wherein the first core network element comprises a user plane network element.

48. A communication method, comprising:
receiving, by a first core network element, a downlink data packet, wherein a header of the downlink data packet carries description information of a second tunnel, and the second tunnel is a tunnel between the first core network element and an application server; and
transmitting, by the first core network element, the downlink data packet over a first tunnel, wherein the header of the downlink data packet carries description information of the first tunnel, and the first tunnel is a tunnel between a terminal and the first core network element.

49. The method according to claim 48, wherein before the transmitting, by the first core network element, the downlink data packet over the first tunnel, the method further comprises:
replacing, by the first core network element, the description information of the second tunnel that is carried in the header of the downlink data packet with the description information of the first tunnel.

50. The method according to claim 48 or 49, wherein the first tunnel is determined based on an association relationship between the description information of the first tunnel and the description information of the second tunnel.

51. The method according to any one of claims 48 to 50, wherein before the receiving, by the first core network element, the downlink data packet, the method further comprises:
receiving, by the first core network element, third information transmitted by a second core network element, wherein the third information is used to indicate an association relationship between the description information of the first tunnel and the description information of the second tunnel.

52. The method according to claim 48 or 49, wherein the first tunnel is determined based on a first service data flow to which the downlink data packet belongs and an association relationship between the description information of the first tunnel and description information of the first service data flow, and the first service data flow is determined based on an association relationship between the description information of the second tunnel and the description information of the first service data flow.

53. The method according to any one of claims 48, 49, and 52, wherein before the receiving, by the first core network element, the downlink beam data packet, the method further comprises:
receiving, by the first core network element, fourth information transmitted by a second core network element, wherein the fourth information is used to indicate an association relationship between the description information of the second tunnel and description information of a first service data flow and an association relationship between the description information of the first tunnel and the description information of the first service data flow.

54. The method according to claim 52 or 53, wherein the description information of the first service data flow comprises at least one of following: an identifier of the first service data flow or an identity of a first device.

55. The method according to any one of claims 48 to 54, wherein the description information of the first tunnel comprises at least one of following: an internet protocol IP 5-tuple corresponding to the first tunnel or an IP 3-tuple corresponding to the first tunnel; and
the description information of the second tunnel comprises at least one of following: an internet protocol IP 5-tuple corresponding to the second tunnel or an IP 3-tuple corresponding to the second tunnel.

56. The method according to any one of claims 48 to 55, wherein the transmitting, by the first core network element, the downlink data packet over the first tunnel comprises:
transmitting, by the first core network element, the downlink data packet over the first tunnel based on control information of the first tunnel.

57. The method according to any one of claims 48 to 56, wherein before the receiving, by the first core network element, the downlink data packet, the method further comprises:
receiving, by the first core network element, fifth information transmitted by a second core network element, wherein the fifth information comprises control information of the first tunnel and an association relationship between the control information of the first tunnel and the description information of the first tunnel.

58. The method according to any one of claims 48 to 57, wherein control information of the first tunnel comprises at least one of following: a radio resource associated with the first tunnel, a bit rate associated with the first tunnel, a quality of service QoS parameter associated with the first tunnel, a gating parameter associated with the first tunnel, a charging parameter associated with the first tunnel, or a data flow identifier associated with the first tunnel.

59. The method according to any one of claims 51, 53, and 57, wherein the second core network element comprises at least one of following: a mobility management network element, a session management network element, or a policy control network element.

60. The method according to any one of claims 48 to 59, wherein the first core network element comprises a user plane network element.

61. A terminal, comprising:
a first processing unit, configured to determine, based on description information of a first service data flow, that an uplink data packet belongs to the first service data flow, wherein the description information of the first service data flow comprises at least one of following: an identifier of the first service data flow or an identity of a first device; and
a first communications unit, configured to transmit the uplink data packet to a first core network element.

62. The terminal according to claim 61, wherein the first processing unit is configured to execute at least one of following: receiving, by using the first communications unit, an uplink data packet transmitted by the first device; and determining that the uplink data packet belongs to the first service data flow in a case that the description information of the first service data flow comprises the identity of the first device; or determining that the uplink data packet belongs to the first service data flow in a case that a flow identifier carried in the uplink data packet matches the identifier of the first service data flow in the description information of the first service data flow.

63. The terminal according to claim 61 or 62, wherein the first processing unit is configured to add at least one of following in a header of the uplink data packet: the identifier of the first service data flow or the identity of the first device.

64. The terminal according to any one of claims 61 to 63, wherein the first communications unit is configured to receive a filter of the first service data flow that is transmitted by a second core network element.

65. The terminal according to any one of claims 61 to 64, wherein the first communications unit is configured to transmit a transmission request message of the first service data flow to a second core network element, wherein the transmission request message carries a filter of the first service data flow.

66. The terminal according to claim 64 or 65, wherein the filter of the first service data flow comprises the description information of the first service data flow.

67. The terminal according to any one of claims 61 to 66, wherein the first communications unit is configured to transmit the uplink data packet to the first core network element based on control information associated with the first service data flow.

68. The terminal according to any one of claims 61 to 67, wherein the first communications unit is configured to receive control information associated with the first service data flow that is transmitted by a second core network element.

69. The terminal according to claim 67 or 68, wherein the control information associated with the first service data flow comprises at least one of following: a radio resource associated with the first service data flow, a bit rate associated with the first service data flow, a quality of service QoS parameter associated with the first service data flow, a gating parameter associated with the first service data flow, a charging parameter associated with the first service data flow, or a data flow identifier associated with the first service data flow.

70. The terminal according to claim 69, wherein the data flow identifier associated with the first service data flow comprises at least one of following: the identifier of the first service data flow or a QoS flow identifier associated with the first service data flow.

71. The terminal according to any one of claims 64 to 66 or claim 68, wherein the second core network element comprises at least one of following: a mobility management network element, a session management network element, or a policy control network element.

72. The terminal according to any one of claims 61 to 71, wherein the first core network element comprises a user plane network element.

73. A first core network element, comprising:
a second communications unit, configured to: receive a data packet; and transmit the data packet; and
a second processing unit, configured to determine, based on description information of a first service data flow, that the data packet belongs to the first service data flow, wherein the description information of the first service data flow comprises at least one of following: an identifier of the first service data flow or an identity of a first device.

74. The first core network element according to claim 73, wherein the second processing unit is configured to execute at least one of following: determining that the data packet belongs to the first service data flow in a case that a service data flow identifier carried in a header of the data packet is the same as the identifier of the first service data flow in the description information of the first service data flow; or determining that the data packet belongs to the first service data flow in a case that a device identity carried in a header of the data packet is the same as the identity of the first device in the description information of the first service data flow.

75. The first core network element according to claim 73 or 74, wherein the second communications unit is configured to receive a filter of the first service data flow that is transmitted by a second core network element, wherein the filter of the first service data flow comprises the description information of the first service data flow.

76. The first core network element according to any one of claims 73 to 75, wherein the data packet is an uplink data packet.

77. The first core network element according to claim 76, wherein the second communications unit is configured to: receive the uplink data packet transmitted by a terminal; and transmit the uplink data packet to an application server based on control information associated with the first service data flow.

78. The first core network element according to any one of claims 73 to 75, wherein the data packet is a downlink data packet.

79. The first core network element according to claim 78, wherein the second communications unit is configured to: receive the downlink data packet transmitted by an application server; and transmit the downlink data packet to a terminal based on control information associated with the first service data flow.

80. The first core network element according to any one of claims 73 to 79, wherein the second communications unit is configured to receive control information associated with the first service data flow that is transmitted by a second core network element.

81. The first core network element according to any one of claims 77, 79, and 80, wherein the control information associated with the first service data flow comprises at least one of following: a radio resource associated with the first service data flow, a bit rate associated with the first service data flow, a quality of service QoS parameter associated with the first service data flow, a gating parameter associated with the first service data flow, a charging parameter associated with the first service data flow, or a data flow identifier associated with the first service data flow.

82. The first core network element according to claim 81, wherein the data flow identifier associated with the first service data flow comprises at least one of following: the identifier of the first service data flow or a QoS flow identifier associated with the first service data flow.

83. The first core network element according to claim 75 or 81, wherein the second core network element comprises at least one of following: a mobility management network element, a session management network element, or a policy control network element.

84. The first core network element according to any one of claims 73 to 83, wherein the first core network element comprises a user plane network element.

85. A terminal, comprising:
a first communications unit, configured to transmit an uplink data packet over a first tunnel, wherein a header of the uplink data packet carries description information of the first tunnel, and the first tunnel is a tunnel between the terminal and a first core network element.

86. The terminal according to claim 85, wherein the terminal further comprises:
a first processing unit, configured to: determine, based on description information of a first service data flow, that the uplink data packet belongs to the first service data flow; and determine, based on an association relationship between the description information of the first service data flow and the description information of the first tunnel, that the uplink data packet corresponds to the first tunnel, wherein the description information of the first service data flow comprises at least one of following: an identifier of the first service data flow or an identity of a first device.

87. The terminal according to claim 86, wherein the first processing unit is configured to execute at least one of following: receiving, by using the first communications unit, the uplink data packet transmitted by the first device; and determining that the uplink data packet belongs to the first service data flow in a case that the description information of the first service data flow comprises the identity of the first device; or determining that the uplink data packet belongs to the first service data flow in a case that a flow identifier carried in the uplink data packet matches the identifier of the first service data flow in the description information of the first service data flow.

88. The terminal according to claim 86 or 87, wherein the first communications unit is configured to transmit first information to a second core network element, wherein the first information is used to indicate the association relationship between the description information of the first service data flow and the description information of the first tunnel.

89. The terminal according to any one of claims 85 to 88, wherein the first communications unit is configured to transmit the uplink data packet over the first tunnel based on control information of the first tunnel.

90. The terminal according to any one of claims 85 to 89, wherein the first communications unit is configured to receive second information transmitted by a second core network element, wherein the second information comprises control information of the first tunnel and an association relationship between the control information of the first tunnel and the description information of the first tunnel.

91. The terminal according to claim 89 or 90, wherein the control information of the first tunnel comprises at least one of following: a radio resource associated with the first tunnel, a bit rate associated with the first tunnel, a quality of service QoS parameter associated with the first tunnel, a gating parameter associated with the first tunnel, a charging parameter associated with the first tunnel, or a data flow identifier associated with the first tunnel.

92. The terminal according to any one of claims 85 to 91, wherein the description information of the first tunnel comprises at least one of following: an internet protocol IP 5-tuple corresponding to the first tunnel or an IP 3-tuple corresponding to the first tunnel.

93. The terminal according to claim 88 or 90, wherein the second core network element comprises at least one of following: a mobility management network element, a session management network element, or a policy control network element.

94. The terminal according to any one of claims 85 to 93, wherein the first core network element comprises a user plane network element.

95. A first core network element, comprising:
a second communications unit, configured to: receive an uplink data packet, wherein a header of the uplink data packet carries description information of a first tunnel, and the first tunnel is a tunnel between a terminal and the first core network element; and transmit the uplink data packet over a second tunnel, wherein the header of the uplink data packet carries description information of the second tunnel, and the second tunnel is a tunnel between the first core network element and an application server.

96. The first core network element according to claim 95, further comprising:
a second processing unit, configured to replace the description information of the first tunnel that is carried in the header of the uplink data packet with the description information of the second tunnel.

97. The first core network element according to claim 95 or 96, wherein the second tunnel is determined based on an association relationship between the description information of the first tunnel and the description information of the second tunnel.

98. The first core network element according to any one of claims 95 to 97, wherein the second communications unit is configured to receive third information transmitted by a second core network element, and the third information is used to indicate an association relationship between the description information of the first tunnel and the description information of the second tunnel.

99. The first core network element according to claim 97 or 98, wherein the second tunnel is determined based on a first service data flow to which the uplink data packet belongs and an association relationship between the description information of the second tunnel and description information of the first service data flow, and the first service data flow is determined based on an association relationship between the description information of the first tunnel and the description information of the first service data flow.

100. The first core network element according to any one of claims 95, 96, and 99, wherein the second communications unit is configured to receive fourth information transmitted by a second core network element, wherein the fourth information is used to indicate an association relationship between the description information of the second tunnel and description information of a first service data flow and an association relationship between the description information of the first tunnel and the description information of the first service data flow.

101. The first core network element according to claim 99 or 100, wherein the description information of the first service data flow comprises at least one of following: an identifier of the first service data flow or an identity of a first device.

102. The first core network element according to any one of claims 95 to 101, wherein the description information of the first tunnel comprises at least one of following: an internet protocol IP 5-tuple corresponding to the first tunnel or an IP 3-tuple corresponding to the first tunnel; and
the description information of the second tunnel comprises at least one of following: an internet protocol IP 5-tuple corresponding to the second tunnel or an IP 3-tuple corresponding to the second tunnel.

103. The first core network element according to any one of claims 95 to 102, wherein the second communications unit is configured to transmit the uplink data packet over the second tunnel based on control information of the first tunnel.

104. The first core network element according to any one of claims 95 to 103, wherein the second communications unit is configured to receive fifth information transmitted by a second core network element, wherein the fifth information comprises control information of the first tunnel and an association relationship between the control information of the first tunnel and the description information of the first tunnel.

105. The first core network element according to claim 103 or 104, wherein the control information of the first tunnel comprises at least one of following: a radio resource associated with the first tunnel, a bit rate associated with the first tunnel, a quality of service QoS parameter associated with the first tunnel, a gating parameter associated with the first tunnel, a charging parameter associated with the first tunnel, or a data flow identifier associated with the first tunnel.

106. The first core network element according to any one of claims 98, 100, and 104, wherein the second core network element comprises at least one of following: a mobility management network element, a session management network element, or a policy control network element.

107. The first core network element according to any one of claims 95 to 106, wherein the first core network element comprises a user plane network element.

108. A first core network element, comprising:
a second communications unit, configured to: receive a downlink data packet, wherein a header of the downlink data packet carries description information of a second tunnel, and the second tunnel is a tunnel between the first core network element and an application server; and transmit the downlink data packet over a first tunnel, wherein the header of the downlink data packet carries description information of the first tunnel, and the first tunnel is a tunnel between a terminal and the first core network element.

109. The first core network element according to claim 108, further comprising:
a second processing unit, configured to replace the description information of the second tunnel that is carried in the header of the downlink data packet with the description information of the first tunnel.

110. The first core network element according to claim 108 or 109, wherein the first tunnel is determined based on an association relationship between the description information of the first tunnel and the description information of the second tunnel.

111. The first core network element according to any one of claims 108 to 110, wherein the second communications unit is configured to receive third information transmitted by a second core network element, and the third information is used to indicate an association relationship between the description information of the first tunnel and the description information of the second tunnel.

112. The first core network element according to claim 108 or 109, wherein the first tunnel is determined based on a first service data flow to which the downlink data packet belongs and an association relationship between the description information of the first tunnel and description information of the first service data flow, and the first service data flow is determined based on an association relationship between the description information of the second tunnel and the description information of the first service data flow.

113. The first core network element according to any one of claims 108, 109, and 112, wherein the second communications unit is configured to receive fourth information transmitted by a second core network element, wherein the fourth information is used to indicate an association relationship between the description information of the second tunnel and description information of a first service data flow and an association relationship between the description information of the first tunnel and the description information of the first service data flow.

114. The first core network element according to claim 112 or 113, wherein the description information of the first service data flow comprises at least one of following: an identifier of the first service data flow or an identity of a first device.

115. The first core network element according to any one of claims 108 to 114, wherein the description information of the first tunnel comprises at least one of following: an internet protocol IP 5-tuple corresponding to the first tunnel or an IP 3-tuple corresponding to the first tunnel; and
the description information of the second tunnel comprises at least one of following: an internet protocol IP 5-tuple corresponding to the second tunnel or an IP 3-tuple corresponding to the second tunnel.

116. The first core network element according to any one of claims 108 to 115, wherein the second communications unit is configured to transmit the downlink data packet over the first tunnel based on control information of the first tunnel.

117. The first core network element according to any one of claims 108 to 116, wherein the second communications unit is configured to receive fifth information transmitted by a second core network element, wherein the fifth information comprises control information of the first tunnel and an association relationship between the control information of the first tunnel and the description information of the first tunnel.

118. The first core network element according to any one of claims 108 to 117, wherein the control information of the first tunnel comprises at least one of following: a radio resource associated with the first tunnel, a bit rate associated with the first tunnel, a quality of service QoS parameter associated with the first tunnel, a gating parameter associated with the first tunnel, a charging parameter associated with the first tunnel, or a data flow identifier associated with the first tunnel.

119. The first core network element according to any one of claims 111, 113, and 117, wherein the second core network element comprises at least one of following: a mobility management network element, a session management network element, or a policy control network element.

120. The first core network element according to any one of claims 108 to 119, wherein the first core network element comprises a user plane network element.

121. A terminal, comprising a transceiver, a processor, and a memory, wherein the memory is configured to store a computer program, the transceiver is configured to communicate with another device, and the processor is configured to invoke and run the computer program stored in the memory, to cause the terminal to execute the method according to any one of claims 1 to 12 or the method according to any one of claims 25 to 34.

122. A first core network element, comprising a transceiver, a processor, and a memory, wherein the memory is configured to store a computer program, the transceiver is configured to communicate with another device, and the processor is configured to invoke and run the computer program stored in the memory, to cause the first core network element to execute the method according to any one of claims 13 to 24, or the method according to any one of claims 35 to 47, or the method according to any one of claims 48 to 60.

123. A chip, comprising a processor, configured to invoke a computer program from a memory and run the computer program, to cause a device on which the chip is installed to execute the method according to any one of claims 1 to 12, or the method according to any one of claims 13 to 24, or the method according to any one of claims 25 to 34, or the method according to any one of claims 35 to 47, or the method according to any one of claims 48 to 60.

124. A computer-readable storage medium, configured to store a computer program, wherein when being run by a device, the computer program causes the device to execute the method according to any one of claims 1 to 12, or the method according to any one of claims 13 to 24, or the method according to any one of claims 25 to 34, or the method according to any one of claims 35 to 47, or the method according to any one of claims 48 to 60.

125. A computer program product, comprising computer program instructions, wherein the computer program instructions cause a computer to execute the method according to any one of claims 1 to 12, or the method according to any one of claims 13 to 24, or the method according to any one of claims 25 to 34, or the method according to any one of claims 35 to 47, or the method according to any one of claims 48 to 60.

126. A computer program, wherein the computer program causes a computer to execute the method according to any one of claims 1 to 12, or the method according to any one of claims 13 to 24, or the method according to any one of claims 25 to 34, or the method according to any one of claims 35 to 47, or the method according to any one of claims 48 to 60.
